# EUROPEAN PATENT SPECIFICATION

(11) **EP 3 167 016 B1**
(45) Date of publication and mention of the grant of the patent: **04.06.2025**
(21) Application number: 15818310.3
(22) Date of filing: 10.07.2015
(51) Int. Cl.: C09D 183/04, C09D 5/16

(54) **NOVEL POLYSILOXANE-BASED FOULING-RELEASE COATS COMPRISING POLY(OXYALKYLENE)-MODIFIED ALCOHOLS**
NEUARTIGE POLYSILOXANBASIERTE FÄULNISFREISETZUNGSBESCHICHTUNGEN MIT POLY(OXYALKYLEN)-MODIFIZIERTEN ALKOHOLEN
NOUVEAUX REVÊTEMENTS ANTI-SALISSURES À BASE DE POLYSILOXANE COMPRENANT DES ALCOOLS MODIFIÉS AU POLY(OXYALKYLÈNE)

(30) Priority: 11.07.2014 EP 14176681
(43) Date of publication of application: 17.05.2017
(73) Proprietor: Hempel A/S, 2800 Kongens Lyngby (DK)
(72) Inventor: SØRENSEN, Kim Flugt, DK-2800 Kongens Lyngby (DK); OLSEN, Stefan Møller, DK-2800 Kongens Lyngby (DK)
(74) Representative: Inspicos P/S
(86) International application number: PCT/DK2015/050217
(87) International publication number: WO 2016/004961

(56) References cited:
- WO-A1-2012/175459
- WO-A1-2013/000477
- WO-A1-2013/000478
- WO-A1-2014/117786
- WO-A1-98/13305
- NL-A- 7 004 127
- US-A- 6 039 965
- US-A1- 2002 010 228
- US-A1- 2014 155 530
- US-A1- 2014 155 530
- NKC: "Lanolin product derivative from NKC Europe LTD", 14 December 2011 (2011-12-14), XP055447241, Retrieved from the Internet <URL:http://new.nkchemicals.com/NK_CHEMICALS_BROCHURE.pdf> [retrieved on 20180202]
- DATABASE WPI Week 197040, Derwent World Patents Index; Class a27, AN 1970-73207r, XP055329923
- CHOI Y.H. ET AL.: "Anti-biofouling behavior of natural unsaturated hydrocarbon phenols impregnated in PDMS matrix", JOURNAL OF INDUSTRIAL AND ENGINEERING CHEMISTRY, vol. 14, 2008, pages 292 - 296, XP022692440, DOI: doi:10.1016/j.jiec.2008.01.012

## Description

### FIELD OF THE INVENTION

The present invention relates to novel silicone-based fouling-release coatings and coating systems comprising one or more poly(oxyalkylene)-modified alcohols and one or more biocides.

### BACKGROUND OF THE INVENTION

Traditionally, silicone formulations rely on physical means, this being mainly a factor of modulus of elasticity and surface tension to create a low bio-fouling surface. The traditional polydimethylsiloxane (PDMS) coatings have shown difficulty in resisting bio-fouling over time, thus decreasing the advantage of drag reduction.

Hence, there is a need for fouling-release polysiloxane-based coating compositions combining the benefits of conventional polysiloxane-based fouling-release coating compositions with the benefits of biocide-based antifouling coating compositions.

The silicone based fouling-release coatings have demonstrated an advantage over conventional antifouling coatings showing significant lower drag resistance, hence reduced fuel consumption of marine vessels. The difference is especially obvious as long as the silicone coating is free from marine fouling. Many conventional silicone coatings have until now only been able to maintain a fouling free surface for a shorter period.

A few biocide containing antifouling coatings have demonstrated a greater resistance towards marine fouling compared to the silicone based fouling-release coatings under e.g. static conditions. The surface characteristics of such a coating will however lead to an increased drag resistance compared to silicone coatings even when the surface is fouling free.

The rationale behind the present invention has been to prolong the fouling free period of a silicone based coating by combining the biocidal components from the antifouling coatings with a silicone based fouling-release coating. This provides a coating with low drag resistance that will remain fouling free for a longer time than conventional silicone based fouling-release coatings.

US 6,313,193 B1 i.a. discloses a composition comprising a silanol-terminated polydimethyl siloxane, a dimethylethoxy-terminated polydimethyl siloxane, polydiethoxy siloxane, and benzalkonium chloride. The polydiethoxy siloxane reacts with the polydimethyl siloxanes so that the polydiethoxy siloxane becomes an integral part of the binder network.

WO 2011/076856 A1 discloses a fouling control coating composition comprising a polysiloxane-based binder system, 0.01-20 % by dry weight of one or more hydrophilic-modified polysiloxanes, and one or more biocides. It is disclosed that hydrophilic-modified polysiloxane being compatible with the polysiloxane-based binder system serves to facilitate the dissolution and transport of biocide to the surface of a coating and that a high hydrophilicity could lead to early depletion of biocide due to a high leaching rate.

WO 2012/175459 A1 discloses coating systems of a first layer comprising a biocide and subsequent layers which are free or substantially free of biocide. The layers may comprise a polyorganosiloxane. It is disclosed that the foul release properties are generally improved when the subsequent coating layer(s) composition forms a generally hydrophobic or amphiphilic foul release coat when dried and cured, and preferably the equilibrium water contact angle of the subsequent layer(s) is greater than 30 degrees at 23° C.

WO 2013/000479 A discloses a cured paint coat comprising a polysiloxane-based binder matrix and one or more biocides, wherein the binder matrix has included as a part thereof hydrophilic oligomer/polymer moieties.

WO 2013/000477 A discloses a cured fouling control coat comprising a polysiloxane-based binder matrix constituting at least 40 % by dry weight of the coat, and one or more enzymes. It is disclosed that the coat may further comprise one or more hydrophilic-modified polysiloxane oils; and that the binder matrix may have included as a part thereof hydrophilic oligomer/polymer moieties.

WO 2013/024106 and US 2014/155530 disclose a fouling-resistant composition which comprises an elastomer and a component comprising sterol(s) and/or sterol derivatives.

WO 2014/117786 discloses multilayer polysiloxane-based fouling control coating systems having included therein active constituents like biocides and/or enzymes. Further, the polysiloxane-based layers may individually have included as a part thereof hydrophilic oligomer/polymer moieties, and/or may further comprise one or more hydrophilic-modified polysiloxane oils.

### SUMMARY OF THE INVENTION

In view of the above-mentioned needs, the present inventors have now developed paint compositions for preparing new fouling-release coatings (i.e. a cured paint coat) comprising a polysiloxane-based binder matrix comprising one or more poly(oxyalkylene)-modified alcohols and one or more biocides, which coatings have excellent fouling-release properties and control the biocide-release. In this way, the advantages of silicone fouling-release can be combined with those of traditional anti-fouling coatings, thus gaining a foul-free, low-friction surface with the use of a relatively small amount of biocide.

A first aspect of the invention relates to a silicone-based fouling-release coat, cf. claim 1.

A second aspect of the invention relates to a silicone-based fouling-release coating system, cf. claim 12.

A third aspect of the invention relates to a marine structure, cf. claim 14.

A fourth aspect of the invention relates to a silicone-based fouling-release coating composition, cf. claim 15.

### DETAILED DISCLOSURE OF THE INVENTION

### Main aspect of the invention - The fouling-release coat

The present invention i.a. relates to a silicone-based fouling-release coat comprising a polysiloxane-based binder matrix constituting at least 40 % by dry weight of said coat, wherein more than 65 % by weight of said binder matrix is represented by polysiloxane parts, said coat further comprising one or more poly(oxyalkylene)-modified alcohols and one or more biocides.

According to the invention, the coat comprises 1-20, such as 2-18, in particular 3-16, g/m² of said one or more poly(oxyalkylene)-modified alcohols and 2-35, such as 3-30, in particular 4-25, g/m² of said one or more biocides.

In an embodiment, the coat comprises 1-10 %, such as 2-8 %, in particular 3-7 %, by dry weight of said one or more poly(oxyalkylene)-modified alcohols and 2-20 %, such as 4-16 %, in particular 5-13 %, by dry weight of said one or more biocides.

In still another embodiment, the coat comprises 1-10 %, such as 2-8 %, in particular 3-7 %, by solids volume of said one or more poly(oxyalkylene)-modified alcohols and 1-13 %, such as 2-10 %, in particular 3-8 %, by solids volume of said one or more biocides.

In yet another embodiment, the weight ratio between the one or more poly(oxyalkylene)-modified alcohols and the one or more biocides is in the range of 5:1 to 1:10, such as 3:1 to 1:5, in particular 2:1 to 1:3.

It should be understood that the above embodiments may be viewed independently or in combination.

In one particular variant of each of the above embodiments, the poly(oxyalkylene)-modified alcohol is a poly(oxyalkylene)-modified sterol.

It should be understood that the expression "fouling-release" (as well as "fouling control") relates to all types of bio-fouling (i.e. settlement of organisms on a surface) of a surface exposed to an aqueous environment or to aqueous liquids (e.g. within tanks, pipes, etc.). It is however, believed that the coatings defined herein are particularly relevant for avoiding or reducing marine bio-fouling, i.e. bio-fouling arising in connection with the exposure of a surface to a marine environment, in particular to sea-water.

The fouling-release coat comprises a polysiloxane-based binder matrix constituting at least 40 % by dry weight of said coat, and more than 65 % by weight of the binder matrix is represented by polysiloxane parts. Often, this coat constitutes the outermost layer of the fouling-release coating system. Hence, it should be understood that the fouling-release coat may be prepared on an already existing coating layer, e.g. an anti-corrosive coating layer or a tie-coat layer, or directly on a native substrate. Alternatively, the coat may prepared on a substrate (e.g. on a tie-coat or on a primer, or simply on a native substrate) and may subsequently be over-coated with a top-coat.

### The polysiloxane-based binder matrix

It should be understood that the polysiloxane-based binder matrix is made up of reactive polysiloxane binder components, e.g. functional organopolysiloxanes (such as polydialkylsiloxane, polyarylsiloxane, polyalkylaryl siloxane or combinations thereof), cross-linkers, silicates (e.g. ethyl silicate), and the like. Thus, it is believed that the reaction between such components will result in the binder matrix in the form of a typically three-dimensional covalently interconnected network. Hence, the polysiloxane-based binder matrix is cross-linked.

The cured paint coat may be formed in various ways, e.g. polymerization/cross-linking by formation of siloxane bonds through a condensation reaction or by the use of their reactive groups such as for example amine/epoxy, carbinol/isocyanate etc. A condensation reaction is preferred.

The polysiloxane-based binder matrix is prepared from a polysiloxane based binder which is a functional organopolysiloxane, with terminal and/or pendant functionality. The terminal functionality is preferred. The functionality can either be hydrolysable groups, such as for example alkoxy groups, ketoxime groups or the functionality can be silanol groups. A minimum of two reactive groups per molecule is preferred. If the molecule contains only two reactive groups, for example silanol groups, it may be necessary to use an additional reactant, a cross-linker, to obtain the desired cross-link density. The cross-linker can for example be an alkoxy silane such as methyltrimethoxysilane, but a wide range of useful silanes are available as will be described further on. The silane can be used as it is or as hydrolysation-condensation products of same. Although condensation cure is much preferred, the functionality of the organopolysiloxane is not limited to a condensation cure. If so desired, other types of curing can be utilized, for example amine/epoxy either alone or in combination with a condensation reaction. In such cases, the organopolysiloxane can have terminal groups of epoxy or amine and pendant hydrolysable groups, for example with alkoxyfunctionality.

In some embodiments, the fouling-release coating composition (i.e. a composition for the preparation of the fouling-release coat) including the polysiloxane-based binder system may be a reaction-curable composition or a condensation-curable composition as will be evident for the person skilled in the art. Examples hereof are a two-component condensation curing composition based on a silanol-reactive polydiorganosiloxane and a silane with hydrolysable groups, or a one-component condensation-curable composition based on a polydiorganosiloxane with alkoxy or other hydrolysable reactivity. Another example is a reaction curable composition based on an epoxyfunctional polysiloxane binder and an amine functional polysiloxane curing agent. Combinations of reaction-curable compositions and condensation-curable compositions are possible, if the binder or the curing agent (or both) includes condensation curable groups, such as alkoxy groups.

In one embodiment, the binder phase comprises (i) a binder and (ii) a cross-linking agent of which the binder (i) should include hydrolysable groups or other reactive groups so as to participate in the formation of the matrix.

The binder (i) typically constitutes 40-90 % by dry weight of the coating composition (and similarly by dry weight of the coat).

The cross-linking agent (ii) preferably constitutes 0-10 % by dry weight of the coating composition (and similarly by dry weight of the coat) and is, e.g., an organosilicon compound represented by the general formula (2) shown below, a partial hydrolysis-condensation product thereof, or a mixture of the two:

Rₐ-Si-X₄₋ₐ (2)

wherein, each R represents, independently, an unsubstituted or substituted monovalent hydrocarbon group of 1 to 6 carbon atoms or a hydrolysable group, each X represents, independently, a hydrolysable group, and a represents an integer from 0 to 2, such as from 0 to 1.

Within the art of polymer chemistry, it is well-known that the term 'partial hydrolysis-condensation product' refers to such compound wherein the compound has been allowed to react with it-self in a condensation reaction creating oligomer or polymer. However such oligomers or polymers still retain the reactive/hydrolysable groups used in the cross-linking reaction.

The compound outlined in formula (2) acts as a cross-linker for the binder (i). The composition can be formulated as a one component curable RTV (room-temperature vulcanizable) by admixing the binder (i) and the cross-linking agent (ii). If the reactivity on the terminal Si-group of the binder (i) consist of readily hydrolysable groups, such as dimethoxy or trimethoxy, a separate cross-linker is usually not necessary to cure the film. The technology behind the curing mechanism and examples of cross-linkers is described in prior art (US 2004/006190).

In one embodiment, R represents a hydrophilic group such as a poly(oxyalkylene). In this case, it is preferred to have a C₂₋₅-alkyl spacer between the Si-atom and the poly(oxyalkylene) group. Hence, the organopolysiloxane may have oxyalkylene domains.

Preferred cross-linkers are those selected from tetramethoxysilane, tetraethoxysilane; tetrapropoxysilane; tetra-n-butoxysilane; vinyltris(methylethyloximino)silane; vinyltris-(acetoxime)silane; methyltris(methylethyloximino)silane; methyltris(acetoxime)silane; vinyltrimethoxysilane; methyltrimethoxysilane; vinyltris(isopropenoxy)silane; tetraacetoxy-silane; methyltriacetoxysilane; ethyltriacetoxysilane; vinyltriacetoxysilane; di-t-butoxy-diacetoxysilane; methyltris(ethyllactate)silane and vinyltris(ethyllactate)silane as well as hydrolysis-condensation products of the same.

More preferred cross-linkers are tetraethoxysilane; vinyltris(methylethyloximino)silane; methyltris(methylethyloximino)silane; vinyltrimethoxysilane; methyltris(methylethyl-oximino)silane; methyltris(ethyllactate)silane vinyltris(ethyllactate)silane as well as hydrolysis-condensation products of the same.

More preferred cross-linkers are tetraethoxysilane; vinyltrimethoxysilane; methyltris(ethyl-lactate)silane; vinyltris(ethyllactate)silane, as well as hydrolysis-condensation products of the same. In a specific embodiment, said cross-linker is tetraethoxysilane or a hydrolysis-condensation product thereof. In another specific embodiment, said cross-linker is vinyltrimethoxysilane or a hydrolysis condensation product thereof. In yet another specific embodiment, said cross-linker is methyltris(ethyllactate)silane or a hydrolysis-condensation product thereof. In yet another specific embodiment, said cross-linker is vinyltris(ethyl-lactate)silane or a hydrolysis-condensation products thereof. In one further embodiment, said cross-linker is a hydrolysis-condensation product. In another embodiment, said cross-linker is not a hydrolysis-condensation product.

Other interesting cross-linkers are those selected from vinyltriethoxysilane, methyltriethoxysilane, ethyltrimethoxysilane, ethyltrimethoxysilane, tetraisopropoxysilane, tetrabutoxysilane as well as hydrolysis-condensation products of the same.

In some interesting embodiments, the polysiloxane-based binder comprises a polydimethylsiloxane-based binder.

In other interesting embodiments, the binder may include fluoro-modifications, e.g. fluoroalkyl modified polysiloxane binders such as silanol-terminated poly(trifluoropropylmethylsiloxane).

The polysiloxane-based binder matrix constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the coating composition or of the cured coat (as the case may be).

The binder is in the form of a cross-linked matrix which incorporates other constituents, e.g. additives, pigments, fillers, etc., as well as poly(oxyalkylene)-modified alcohol(s) (see below), any hydrophilic-modified polysiloxane oil(s), and any biocide(s) (see below), in the fouling-release coat.

In some embodiments, the polysiloxane-based binder matrix may have included as a part of the binder matrix hydrophilic oligomer/polymer moieties, e.g. as disclosed in WO 2013/000479 (see in particular pages 5-16), such as terminal and/or pendant oligomer/polymer moieties, e.g. of the poly(oxyalkylene) type, for example selected from polyoxyethylene, polyoxypropylene and poly(oxyethylene-co-oxypropylene). The specifications with respect to such moieties are as disclosed in WO 2013/000479.

The term "polysiloxane-based binder matrix" is intended to mean that the binder matrix mainly consists of polysiloxane parts, i.e. that more than 65 % by weight, preferably more than 70 % by weight, e.g. more than 75 % by weight, of the binder matrix is represented by polysiloxane parts. Preferably the polysiloxane parts constitute 65-100 % by weight, e.g. 65-99.9 % by weight, in particular 70-100 % by weight, or 70-99 % by weight, or 70-98 % by weight, or 75-97 % by weight, or even 75-99 % by weight, or 80-98 % by weight, or 90-97 % by weight, of the binder matrix (i.e. the binder components and any cross-linkers). The remainder of the binder matrix may e.g. - if present - be made of any hydrophilic oligomer/polymer moieties and any (non-polysiloxane-type) cross-linkers. In some important embodiments, the polysiloxane-based binder matrix consists only of polysiloxane parts and residues of any non-polysiloxane-type cross-linkers. Importantly, the term "polysiloxane-based binder matrix" is to be understood in the conventional sense, namely that the binder matrix has a backbone structure of polysiloxane parts. The term 'polysiloxane' is well-known to designate such polymers having a backbone in which atoms of silicon and oxygen alternate and which is devoid of carbon atoms (The New Encyclopedia Britannica in 30 volumes micropaedia volume IX. 1975 defining polysiloxane by referral to silicone). Similarly, the term polyorganosiloxane is intended to mean a polysiloxane backbone with organic (i.e. carbon-based) substituent on the silicon atoms.

When calculating the amount of the polysiloxane parts and any other parts, respectively, for a given starting material (or an adduct), it is typically fairly straightforward to distinguish between the two. However, in order to eliminate any doubt about any linkers between the two, it should be understood that any hydrophilic oligomer/polymer moieties (here mentioned as an example only) include all atoms up to, but not including, the silicon atom through which the moiety is covalently attached to the polysiloxane parts. As an example, in a structure of the type [polysiloxane-O]-Si(Me)₂-CH₂CH₂CH₂-[hydrophilic oligomer/polymer moiety], the [polysiloxane-O]-Si(Me)₂ part is accounted for as a silicone part, whereas the CH₂CH₂CH₂-[hydrophilic oligomer/polymer moiety] is accounted for as the hydrophilic oligomer/polymer moiety.

### Catalyst

The coating compositions used for forming the fouling-release coat may further comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexanoate, dioctyl tin dilaurate, dioctyl tin diacetate, dioctyl tin dioctoate, dioctyl tin 2-ethylhexanoate, dioctyltin di neodecanoate, tin naphthenate, tin butyrate, tin oleate, tin caprylate, bismuth 2-ethylhexanoate, bismuth octanoate, bismuth neodecanoate, iron 2-ethylhexanoate, lead 2-ethyloctoate, cobalt-2-ethylhexanoate, manganese 2-ethylhexanoate, zinc 2-ethylhexanoate, zinc naphthenate, zinc stearate, cobalt naphthenate and titanium naphtenate; titanate- and zirconate esters such as tetrabutyl titanate, tetrakis(2-ethylhexyl)titanate, triethanolamine titanate, tetra(isopropenoxy)titanate, titanium tetrabutanolate, titanium tatrapropanolate; titanium tetraisopropanolate, zirconium tetrapropanolate, zirconium tetrabutanolate; chelated titanates such as diisopropyl bis(acetylacetonyl)titanate. Further catalysts include tertiary amines, such as triethylamine, tetrametylethylenediamine, pentamethyldiethylenetriamine and 1,4-ethylenepiperazine. Further examples include guanidine based catalysts. Even further examples of condensation catalysts are described in WO 2008/132196 and US 2004/006190.

The catalyst may be used alone or as combination of two or more catalysts. In one embodiment, said catalyst(s) are selected from the group consisting of tin and titanium oxide(s) (titanate(s)). In one specific embodiment, said catalyst is tin-based. In one embodiment, a catalyst is included, which is devoid of tin. In another embodiment, said catalyst comprises one or more titanium oxide(s) (titanate(s)). The amount of catalyst to be used is depending on the reactivity of the catalyst and the cross-linker(s) and desired drying time. In a preferred embodiment the catalyst concentration is between 0.01-10 %, e.g. 0.01-3.0 %, or 5.0-10 %, or 0.1-4.0 %, or 1.0-6.0 %, by weight of the total combined amount of the binder (i) and cross-linking agent (ii).

In some embodiments, a catalyst is not included.

### Solvents, additives, pigments and fillers

The coating composition used for forming the fouling-release coat may further comprise solvents and additives.

Examples of solvents are aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof. Alternatively, the solvent system may include water or be water-based (>50% water in the solvent system).

In one embodiment, the solvents are selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110 °C or more.

The solvents, if any, typically constitute 5-50 % by volume of the coating composition. It is understood that the final coat is substantially free from any solvents, because such constituents have evaporated during drying/curing of the coat.

Examples of additives are:
(i) non-reactive fluids such as organopolysiloxanes; for example polydimethylsiloxane, methylphenyl polysiloxane; petroleum oils and combinations thereof;
(ii) surfactants such as ethoxylated monoethanolamides of unsaturated fatty acids such as ethoxylated monoethanolamides of linoleic acid; sodium dodecyl sulfate; and soya lecithin;
(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
(iv) thickeners and anti-settling agents (e.g. thixotropic agents) such as colloidal silica, hydrated aluminium silicate (bentonite), aluminium tristearate, aluminium monostearate, xanthan gum, chrysotile, pyrogenic silica, hydrogenated castor oil, organo-modified clays, polyamide waxes and polyethylene waxes;
(v) dyes such as 1,4-bis(butylamino)anthraquinone and other anthraquinone derivatives; toluidine dyes, etc.; and
(vi) antioxidants such as bis(tert-butyl) hydroquinone, 2,6-bis(tert-butyl) phenol, resorcinol, 4-tert-butyl catechol, tris(2,4-di-tert-butylphenyl)phosphite, pentaerythritol Tetrakis(3-(3,5-di-tert-butyl-4-hydroxyphenyl)propionate), bis(2,2,6,6,-tetramethyl-4-piperidyl)sebacate, etc.

Any additives typically constitute 0-30 %, such as 0-15 %, by dry weight of the coating composition or of the cured coat (as the case may be).

Preferably, the coating composition comprises one or more thickeners and/or anti-settling agents (e.g. thixotropic agents), preferably in an amount of 0.2-10 %, such as 0.5-5 %, e.g. 0.6-4 %, by dry weight of the coating composition or of the cured coat (as the case may be).

Furthermore, the coating composition used for forming the fouling-release coat may comprise pigments and fillers.

Pigments and fillers are in the present context viewed in conjunction as constituents that may be added to the coating composition with only limited implications on the adhesion properties. "Pigments" are normally characterised in that they render the final paint coating non-transparent and non-translucent, whereas "fillers" normally are characterised in that they do not render the paint non-translucent and therefore do not contribute significantly to hide any material below the coating.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the coating composition may also comprise fibres, e.g. those generally and specifically described in WO 00/77102 which is hereby incorporated by reference.

Any pigments and/or fillers typically constitute 0-60 %, such as 0-50 %, preferably 5-45 %, such as 5-40 %, or 5-35 %, or 0.5-25 %, or 1-20 %, by dry weight of the coating composition or of the cured coat (as the case may be). Taking into account the density of any pigments and/or fillers, such constituents typically constitute 0.2-20 %, such as 0.5-15 % by solids volume of the coating composition or of the cured coat (as the case may be).

With the aim of facilitating easy application of the coating composition (e.g. by spray, brush or roller application techniques), the coating composition typically has a viscosity in the range of 25-25,000 mPa·s, such as in the range of 150-15,000 mPa·s, in particular in the range of 200-4,000 mPa·s.

In some embodiments, the fouling-release coat may comprise one or more hydrophilic-modified polysiloxane oils of the type disclosed in WO 2011/076856 (see in particular pages 4-10). Particularly preferred are poly(oxyalkylene)-modified polysiloxanes, such as those of formula (A), (B) or (C) disclosed in WO 2011/076856.

### Poly(oxyalkylene)-modified alcohols

It has been found that functionalization of the hydroxy group of alcohols with poly(oxyalkylenes) provides compounds which are highly useful in fouling-release coatings in combination with biocides, in particular organic biocides such as zinc pyrithione, copper pyrithione and Zineb. This will be elaborated on further below and in the Examples section.

The coat comprises one or more poly(oxyalkylene)-modified alcohols having the general formula (I):

(POA-O-)_{X}-R-(-O-FA)_{Y} (I)

wherein
each POA represents a poly(oxyalkylene) moiety,
each FA represents a C₈₋₃₀ fatty acyl moiety,
R represents the organic residue of an alcohol R(OH)_{X+Y}, said organic residue having 2-50 carbon atoms, and
X is 1-5, Y is 0-10 and X+Y is 1-12.

In the above formula (I), -O- in connection with POA-O- represents an ether oxygen covalently linking the poly(oxyalkylene) and the organic residue of the alcohol. The fatty acyl moiety, FA, is a long chain acyl moiety forming an ester bond (-O-C(=O)-) together with the -O- of the -O-FA.

The organic residue is typically purely of hydrocarbon origin, i.e. consisting of linear, branched, cyclic, unsaturated and/or aromatic moieties, *except* that it may include 1-5 ether bonds (-C-O-C-) either being part of a ring structure or being attached directly to a ring structure. In some embodiments, the organic residue is of purely hydrocarbon origin.

In one embodiment, the organic residue, R, of the alcohol R(OH)_{X+Y} has 2-50 carbon atoms, such as 3-50 carbon atoms, and has only linear, branched and/or unsaturated moieties.

In another embodiment, the organic residue, R, of the alcohol R(OH)_{X+Y} has 2-50 carbon atoms, such as 3-50 carbon atoms, and is selected from substituted phenols, sorbitans or sterols.

The organic residue, R, such as in the before-mentioned embodiments, typically has 2-50 carbon atoms, e.g. 3-50 carbon atoms, or 6-50 carbon atoms, such as 8-45 carbon atoms, e.g. 9-40 carbon atoms, or 10-35 carbon atoms.

In the embodiments where X+Y is 1, the organic residue typically has 6-50 carbon atom.

Typically, the poly(oxyalkylene) moieties, POA, each represents an R¹O-[R²-O]ₙ-R³- moiety wherein R¹ is selected from hydrogen, C₁₋₄-alkyl-C(=O)- and C₁₋₄-alkyl; each R² and R³ is selected from ethyl-1,2-ene and propyl-1,2-ene; and n is an integer of 1-150.

The poly(oxyalkylene) moiety POA is typically a poly(oxyalkylene) moiety selected from polyoxyethylene, polyoxypropylene and poly(oxyethylene-co-oxypropylene).

In some interesting embodiments, n is ranging from 4-150, such as from 5-100, such as from 6-75, in particular 6-30.

In one embodiment, the poly(oxyalkylene) is selected from polyoxyethylene and poly(oxyethylene-co-oxypropylene), preferably from poly(oxyalkylenes), such as those having a number average molecular weight of 100-20,000 g/mol, such as 200-20,000 g/mol, in particular 300-5,000 g/mol.

In one variant hereof, the poly(oxyalkylene) is selected from polyoxyethylenes. Illustrative examples hereof are PEG-30 and PEG-75.

In another variant hereof, the poly(oxyalkylene) is selected from poly(oxyethylene-co-oxypropylene). Illustrative examples hereof are PEG-5/PPG-5 and PEG-10/PPG-3.5.

The fatty acids giving rise to the fatty acyl moieties, FA, upon partial esterification of the alcohol R(OH)_{X+Y} are C₈₋₃₀ fatty acids, such as C₁₀₋₂₄ fatty acids. In some variants, the fatty acids may include one or more unsaturated bonds. Examples of fatty acids are stearic acid, lauric acid and oleic acid.

In formula (I), (POA-O-)_{X}-R-(-O-FA)_{Y}, X is 1-5, Y is 0-10 and X+Y is 1-12. In some embodiments, X is 1-5 and Y is 0. In other embodiments, X is 1 and Y is 1-10. In still other embodiments, X is 1-3 and Y is 1-5.

In some embodiments, the one or more poly(oxyalkylene)-modified alcohols have a melting point of 0-60 °C, such as 0-45 °C, in particular 0-30 °C.

In a further embodiments, the one or more poly(oxyalkylene)-modified alcohols have a surface tension above the critical micelle concentration in water of 20-55 mN/m, such as 25-50 mN/m, e.g. 25-45 mN/m, or 30-50 mN/m, preferably 30-45 mN/m. The surface tension is determined as described in the Examples section.

In one embodiment, the coat comprises 1-10 %, such as 2-8 %, in particular 3-7 %, by dry weight of said one or more poly(oxyalkylene)-modified alcohols.

In another embodiment, the coat comprises 1-10 %, such as 2-8 %, in particular 3-7 %, by solids volume of said one or more poly(oxyalkylene)-modified alcohols.

In still another embodiment, the coat (or a corresponding coating system) comprising 1-20, such as 2-18, in particular 3-16, g/m² of said one or more poly(oxyalkylene)-modified alcohols.

In one particular embodiment, the coat comprises one or more poly(oxyalkylene)-modified alcohols which include, or consist of, one or more poly(oxyalkylene)-modified sterols.

Sterols are terpene-derived compounds sharing the generic structure (II) 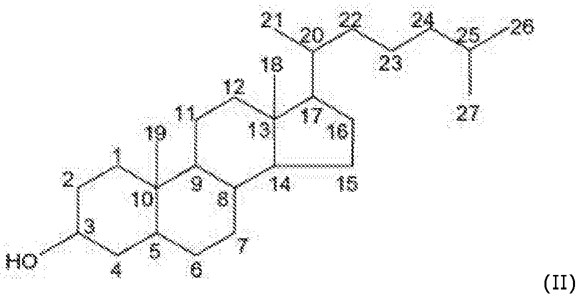 wherein the 3-position (in the A-ring) is hydroxy functional, and wherein (like in cholesterol) the 17-position typically carries a branched aliphatic chain (the chain C²⁰ to C²⁷ is provided as the most typical constitution). Other positions, like the 4-position, the 14-position, etc. may also carry substituents (typically methyl groups), just as the structure may contain ethylenically unsaturated double bonds, e.g. between carbons 5 and 6 like in cholesterol, or between carbon 8 and 9 like in lanosterol. Also, the sterol may have one or more hydroxy groups other than the hydroxy group in the 3-position.

In some embodiments, the sterol represents the alcohol R-OH, hence X+Y is 1.

The hydroxy group in the 3-position is available for functionalization, e.g. ether-modification such as by means of poly(oxyalkylenes) to provide poly(oxyalkylene)-modified sterols.

Poly(oxyalkylene)-modified sterols may be produced by reacting sterol alcohol with alkylene oxide, thereby polymerising polyalkylene oxide by ring opening polymerisation initiated by the alcohol. Typical sources of such sterols are Aqualose by Croda, Generol by BASF and Lipolan by Lipo chemicals. It has been found that functionalization of the 3-hydroxy group of sterols with poly(oxyalkylenes) provides compounds which are particularly useful in fouling-release coatings in combination with biocides, in particular organic biocides such as zinc pyrithione, copper pyrithione and Zineb.

In the present context, "poly(oxyalkylene)-modified sterols" should be understood as products predominantly consisting of sterols of the generic structure (II) being ether-functionalized at the 3-position with a poly(oxyalkylene) (i.e. -OH in the 3-position being replaced with POA-O-).

In the present context, the term "predominantly consisting of" means that at least 75 % by solids weight of the "poly(oxyalkylene)-modified sterols" consist of sterols of the generic structure (II) being ether-functionalized at the 3-position with a poly(oxyalkylene). Preferably, at least 80 %, such as at least 85, or at least 90 %, by solids weight of the "poly(oxyalkylene)-modified sterols" consist of such sterols. The less than 100 % content of the ether functionalised sterol of the generic structure (II) is due to the fact that many commercially available qualities of "sterols" comprises small amount of impurities.

In another particular embodiment, the alcohol R(OH)_{X+Y} is selected from phenols.

Phenols are compounds of the generic structure (III): 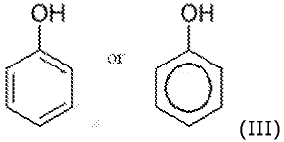 wherein the 1-position is hydroxy functional, and where the hydrogen at the 2, 3, 4, 5, or 6-position may be substituted with a linear, branched, cyclic, unsaturated and/or aromatic moiety, which further may carry fatty acyl moieties of the formula -O-FA as specified further above. In one interesting variant, the phenyl is substituted, in particular the 2-, 4- and 6-positions are each substituted, for example with a styryl, a nonyl and/or a butyl group. Hence, in these latter cases, the alcohol may be selected from tristyrylphenol, nonylphenol and tributylphenol.

The hydroxy group in the 1-position is available for functionalization as specified further above by means of poly(oxyalkylenes) to provide poly(oxyalkylene)-modified phenols.

In still another particular embodiment, the alcohol R(OH)_{X+Y} is a sorbitan. Sorbitan is a compound of the generic structure (IV): 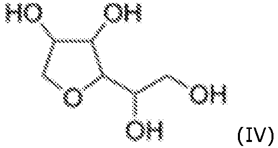 and corresponds to an alcohol of the general formula R(OH)₄. Sorbitan may be modified by partial esterification of up to three of the four -OH group by fatty acids leaving one or more - OH groups unmodified and available for poly(oxyalkylene) modification. In some embodiments of the formula (I), (POA-O-)_{X}-R-(-O-FA)_{Y}, X is 1-3, Y is 1-3 and X+Y is 4, such as where X is 1-2, Y is 2-3, and X+Y is 4.

In a specific embodiment, the poly(oxyalkylene)-modified sorbitan is based on sorbitan trioleate, leaving only one -OH group available for functionalization as specified further above by means of poly(oxyalkylenes) to provide poly(oxyalkylene)-modified sorbitan trioleate, i.e. X is 1 and Y is 3.

In still another particular embodiment, the alcohol is selected from C₆₋₃₀ saturated straight or branched chain alcohols, such as saturated straight chain primary alcohols and saturated branched chain secondary or tertiary alcohols. The hydroxy group is available for functionalization, e.g. ether-modification such as by means of poly(oxyalkylenes) to provide poly(oxyalkylene)-modified C₆₋₃₀ alcohols, e.g. straight chain primary alcohols and poly(oxyalkylene)-modified branched chain secondary and/or tertiary alcohols. In some embodiment, such alcohols have 8-30 carbon atoms, such as 10-24 carbon atoms.

Specific examples of the above-mentioned alcohols are C₈₋₃₀ alkylalcohols, such as C₁₀₋₁₅ saturated straight chain primary alcohols, branched C₁₃ alcohols, and oleyl alcohol.

It should be understood that the above embodiments may be viewed independently or in combination. Hence, the one or more poly(oxyalkylene)-modified alcohols may be represented by different of the types specified above or by several variants within the same type.

### Biocides

It should be understood that the coat comprises one or more biocides.

In the present context, the term "biocide" is intended to mean an active substance intended to destroy, deter, render harmless, prevent the action of, or otherwise exert a controlling effect on any harmful organism by chemical or biological means.

Illustrative examples of biocides are those selected from metallo-dithiocarbamates such as bis(dimethyldithiocarbamato)zinc, ethylene-bis(dithiocarbamato)zinc, ethylene-bis(dithio-carbamato)manganese, dimethyl dithiocarbamate zinc, and complexes between these; bis(1-hydroxy-2(1H)-pyridinethionato-O,S)-copper; copper acrylate; bis(1-hydroxy-2(1H)-pyridine-thionato-O,S)-zinc; phenyl(bispyridyl)-bismuth dichloride; metal biocides such as copper(I)oxide, cuprous oxide, metallic copper, copper metal alloys such as copper-nickel alloys like copper bronze; metal salts such as cuprous thiocyanate, basic copper carbonate, copper hydroxide, barium metaborate, copper chloride, silver chloride, silver nitrate and copper sulphide; heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine^{®}-211N), 1,2-benzisothiazolin-3-one, and 2-(thiocyanatomethylthio)-benzothiazole; urea derivatives such as N-(1,3-bis(hydroxylmethyl)-2,5-dioxo-4-imidazolidinyl)-N,N'-bis(hydroxymethyl)urea, and N-(3,4-dichlorophenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethyl-amines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethyl-amino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole; bis(N-cyclohexyl-diazenium dioxy) copper, thiabendazole, N-trihalomethyl thiopthalimides, trihalomethyl thiosulphamides, capsaicin, 3-iodo-2-propynylbutyl carbamate, 1,4-dithiaanthraquinone-2,3-dicarbonitrile (dithianon), furanones such as 3-butyl-5-(dibromomethylidene)-2(5H)-furanone, macrocyclic lactones such as avermectins; and mixtures thereof.

Presently, it is preferred that the biocide (if present) does not comprise tin.

Currently preferred biocides are those selected from the group consisting of 2,4,5,6-tetra-chloroisophtalonitrile (Chlorothalonil), copper thiocyanate (cuprous sulfocyanate), N-dichloro-fluoromethylthio-N',N'-dimethyl-N-phenylsulfamide (Dichlofluanid), 3-(3,4-dichlorophenyl)-1,1-dimethylurea (Diuron), N²-tert-butyl-N⁴-cyclopropyl-6-methylthio-1,3,5-triazine-2,4-diamine (Cybutryne), 4-bromo-2-(4-chlorophenyl)-5-(trifluoromethyl)-1H-pyrrole-3-carbonitrile, (2-(p-chlorophenyl)-3-cyano-4-bromo-5-trifluoromethyl pyrrole; Tralopyril), *N*²-*tert*-butyl-*N⁴-*cyclopropyl-6-methylthio-1,3,5-triazine-2,4-diamine (Cybutryne), (RS)-4-[1-(2,3-dimethylphenyl)ethyl]-3H-imidazole (Medetomidine), 4,5-dichloro-2-n-octyl-4-isothiazolin-3-one (DCOIT, Sea-Nine^{®} 211N), dichlor-N-((dimethylamino)sulfonyl)fluor-N-(p-tolyl)methansulfenamid (Tolylfluanid), 2-(thiocyanomethylthio)-1,3-benzothiazole ((2-benzothiazolylthio)methyl thiocyanate; TCMTB), triphenylborane pyridine (TPBP); bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione), zinc ethylene-1,2-bis-dithiocarbamate (zinc-ethylene-N-N'-dithiocarbamate; Zineb), copper(i) oxide, metallic copper, 3-(3,4-dichlorophenyl)-1,1-dimethylurea (Diuron) and diiodomethyl-p-tolylsulfone; Amical 48. Preferably at least one biocide is selected from the above list.

In a particularly preferred embodiment, the biocides are preferably selected among biocides which are effective against soft fouling such as slime and algae. Examples of such biocides are N²-tert-butyl-N⁴-cyclopropyl-6-methylthio-1,3,5-triazine-2,4-diamine (Cybutryne), 4,5-dichloro-2-n-octyl-4-isothiazolin-3-one (DCOIT, Sea-Nine^{®} 211N), bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione; Copper Omadine) and zinc ethylene-1,2-bis-dithiocarbamate (zinc-ethylene-N-N'-dithiocarbamate; Zineb), copper(I) oxide, metallic copper, copper thiocyanate, (cuprous sulfocyanate), bis(1-hydroxy-2(1H)-pyridinethionato-O,S)-T-4) copper (copper pyridinethione; copper pyrithione; Copper Omadine).

In some embodiments, at least one biocide is an organic biocide. In a further particularly preferred embodiment, the one or more biocides are organic biocides, such as a pyrithione complex, such as zinc pyrithione, or such as copper pyrithione. Organic biocides are those either fully or in part being of organic origin.

In one important embodiment, the one or more biocides comprises at least one of bis(1-hydroxy-2(1H)-pyridinethionato-O,S)-(T-4) zinc (zinc pyridinethione; Zinc Pyrithione), bis(1-hydroxy-2(1H)-pyridinethionato-O,S)-(T-4) copper (copper pyridinethione; Copper Pyrithione) and zinc ethylene-1,2-bis-dithiocarbamate (zinc-ethylene-N-N'-dithiocarbamate; Zineb).

As detailed in US 7,377,968, in those instances in which the biocide is depleted rapidly from the film due to e.g. a high water solubility or a high level of immiscibility with the matrix composition, it can be advantageous to add one or more of the biocide(s) in encapsulated form as a means of controlling the biocide dosage and extending the effective lifetime in the film. Encapsulated biocides can also be added if the free biocide alters the properties of the polysiloxane matrix in a way that is detrimental for its use as antifouling coatings (e.g. mechanical integrity, drying times, etc.).

In one embodiment, the biocide is encapsulated 4,5-dichloro-2-n-octyl-4-isothiazolin-3-one (Sea-Nine CR2).

The biocide preferably has a solubility in the range of 0-20 mg/L, such as 0.00001-20 mg/L, in water at 25 °C.

In one embodiment, the coat comprises 2-20 %, such as 4-16 %, in particular 5-13 %, by dry weight of said one or more biocides.

In another embodiment, the coat comprises 1-13 %, such as 2-10 %, in particular 3-8 %, by solids volume of said one or more biocides.

In still another embodiment, the coat comprises 2-35, such as 3-30, in particular 4-25, g/m² of said one or more biocides.

It should be understood that the above embodiments may be views independently or in combination.

### Specific embodiments of the main aspect of the invention

In one embodiment the fouling-release coat comprises:
40-98 %, such as 60-95 %, by dry weight of a polysiloxane-based binder matrix wherein more than 65 % by weight of the binder matrix is represented by polysiloxane parts,
0.1-20 %, such as 1-10 %, by dry weight of one or more additives,
0-25 %, such as 0.1-15 %, by dry weight of one or more pigments and fillers,
1-10 %, such as 2-8 %, in particular 3-7 %, by dry weight of one or more poly(oxyalkylene)-modified alcohols, and
2-20 %, such as 4-16 %, in particular 5-13 %, by dry weight of one or more biocides.

In another embodiment the fouling-release coat comprises:
40-98 %, such as 60-95 %, by solids volume of a polysiloxane-based binder matrix wherein more than 65 % by weight of the binder matrix is represented by polysiloxane parts,
0.1-20 %, such as 0.1-15 %, by solids volume of one or more additives,
1-10 %, such as 2-8 %, by solids volume of one or more pigments and fillers,
1-10 %, such as 2-8 %, in particular 3-7 %, by solids volume of one or more poly(oxyalkylene)-modified alcohols; and
1-13 %, such as 2-10 %, in particular 3-8 %, by solids volume of said one or more biocides.

In variants of the above-mentioned embodiments, the weight ratio between the one or more poly(oxyalkylene)-modified alcohols and the one or more biocides is in the range of 5:1 to 1:10, such as 3:1 to 1:5, in particular 2:1 to 1:3.

In yet another embodiment the fouling-release coat comprises:
1-20, such as 2-18, in particular 3-16, g/m² of one or more poly(oxyalkylene)-modified sterols, and 2-35, such as 3-30, in particular 4-25, g/m² of one or more biocides.

In one variant hereof, the fouling-release coat comprises:
40-98 %, such as 60-95 %, by dry weight of a polysiloxane-based binder matrix wherein more than 65 % by weight of the binder matrix is represented by polysiloxane parts,
0.1-20 %, such as 1-10 %, by dry weight of one or more additives,
0-25 %, such as 0.1-15 %, by dry weight of one or more pigments and fillers,
1-20, such as 2-18, in particular 3-16, g/m² of one or more poly(oxyalkylene)-modified alcohols, and
2-35, such as 3-30, in particular 4-25, g/m² of one or more biocides.

In another variant hereof, the fouling-release coat comprises:
40-98 %, such as 60-95 %, by solids volume of a polysiloxane-based binder matrix wherein more than 65 % by weight of the binder matrix is represented by polysiloxane parts,
0.1-20 %, such as 0.1-15 %, by solids volume of one or more additives,
1-10 %, such as 2-8 %, by solids volume of one or more pigments and fillers,
1-20, such as 2-18, in particular 3-16, g/m² of one or more poly(oxyalkylene)-modified alcohols, and 2-35, such as 3-30, in particular 4-25, g/m² of one or more biocides.

In one particular interesting variant of the above embodiments and variants, the poly(oxyalkylene)-modified alcohol is a poly(oxyalkylene)-modified sterol.

### Preparation of coating composition

The fouling-release coat is prepared from corresponding coating composition.

Such coating compositions may be prepared by any suitable technique that is commonly used within the field of paint production. Thus, the various constituents may be mixed together utilizing a mixer, a high speed disperser, a ball mill, a pearl mill, a grinder, a three-roll mill etc. The coating compositions are typically prepared and shipped as two- or three-component systems that should be combined and thoroughly mixed immediately prior to use. The paints according to the invention may be filtrated using bag filters, patron filters, wire gap filters, wedge wire filters, metal edge filters, EGLM turnoclean filters (ex. Cuno), DELTA strain filters (ex. Cuno), and Jenag Strainer filters (ex. Jenag), or by vibration filtration. An example of a suitable preparation method is described in the Examples.

The coating composition to be used in the method of the invention is typically prepared by mixing two or more components e.g. two pre-mixtures, one pre-mixture comprising the one or more reactive polysiloxane binders and one pre-mixture comprising the one or more cross-linking agents. It should be understood that when reference is made to the coating composition, it is the mixed coating composition ready to be applied. Furthermore, all amounts stated as % by dry weight of the coating composition should be understood as % by dry weight of the mixed paint composition ready to be applied, i.e. the weight apart from the solvents (if any).

### First alternative aspect of the invention - A coating system

The present invention also relates to a silicone-based fouling-release coating system comprising one or more coats of a polysiloxane-based binder matrix constituting at least 40 % by dry weight, and more than 65 % by weight of the binder matrix being represented by polysiloxane parts, wherein one or more coats further comprise one or more poly(oxyalkylene)-modified alcohols as further specified above, such as one or more poly(oxyalkylene)-modified sterols, and one or more coats further comprise one or more biocides, and wherein the coating system comprising 1-20, such as 2-18, in particular 3-16, g/m² of said one or more poly(oxyalkylene)-modified alcohols and 2-35, such as 3-30, in particular 4-25, g/m² of said one or more biocides.

In one embodiment, the weight ratio between the total amount of the one or more poly(oxyalkylene)-modified alcohols and the total amount of the one or more biocides is in the range of 5:1 to 1:10, such as 3:1 to 1:5, in particular 2:1 to 1:3.

The fouling-release coating system comprises one or more coats, e.g. at least a cured first coat and a cured second coat. First, the polysiloxane-based binder matrix which is present in the first coat as well as any subsequent coats (except that the matrix is not necessarily identical) is as described in the above sections "The polysiloxane-based binder matrix", "Catalysts", "Solvents, additives, pigments and fillers", "Poly(oxyalkylene)-modified alcohols" (where applicable), "Biocides" (where applicable), and "Specific embodiments ..".

It should be understood that although the first coat and any subsequent coats are of the same type (i.e. polysiloxane-based), the first coat and any subsequent coats are not identical. In particular, it is preferred that the first coat and any subsequent coats differ with respect to at least one of i) the content and/or type of biocide, ii) the content and/or type of poly(oxyalkylene)-modified alcohol(s).

It should be understood that in one variant of this aspect of the invention, the coating system comprises only one coat, in particular as described above under the heading "Main aspect of the invention".

In another variant of this aspect of the invention, the fouling-release coating system comprises at least a cured first coat and a cured second coat,
a) said first coat comprising a polysiloxane-based binder matrix constituting at least 40 % by dry weight of said first coat, and more than 65 % by weight of the binder matrix being represented by polysiloxane parts, said first coat further comprising one or more biocides; and
b) said second coat comprising a polysiloxane-based binder matrix constituting at least 40 % by dry weight of said second coat, and more than 65 % by weight of the binder matrix being represented by polysiloxane parts, said second coat further comprising one or more poly(oxyalkylene)-modified alcohols.

Preferably, the weight ratio between the one or more poly(oxyalkylene)-modified alcohols and the one or more biocides is in the range of 5:1 to 1:10, such as 3:1 to 1:5, in particular 2:1 to 1:3.

Within this variant (as well as other variants comprising two or more coats), it should be understood that the cured first coat as well as the cured second coat are prepared on a substrate in such a way that the second coat is prepared on top of the first coat. Also, it should be understood that the first coat may be prepared on an already existing coating layer, e.g. an anti-corrosive coating layer, or a tie-coat layer, or an aged antifouling or fouling-release coat, etc., or directly on a native substrate (see further below in the section "Application of coating compositions". Moreover, although the second coat is preferably the outermost layer, the second coat may in principle be over-coated with a further coating layer (e.g. a top-coat).

Subsequently, the specific features of the first coat is described in the section "The first coat .." below, whereas the specific features of the second coat is further described in the section "The second coat .." further below.

Inclusion of biocide(s) in the first coat and poly(oxyalkylene)-modified alcohol(s) in the subsequent coat(s) is believed to improve the resistance towards bio-fouling of said fouling-release system compared to a system where the second coat does not contain poly(oxyalkylene)-modified alcohols. Without being bound to any particular theory, it is believed that the poly(oxyalkylene)-modified alcohols in the outermost coating layer will mobilise the biocide(s) during diffusion through the outermost layer.

Further embodiments of how the first coat and any subsequent coats are prepared are outlined in the sections "Application of the coating system" and "A marine structure" further below.

### The first coat of coating system

The first coat of the coating system is essentially as described above for the silicone-based fouling-release coat in the section "Main aspect of the invention - The fouling-release coat", (i) except that the first coat has included therein one or more biocides (according to the specification in that section), and (ii) except that the first coat does not have - as a mandatory constituent - included poly(oxyalkylene)-modified alcohol(s). Otherwise, the first coat is a described above, *mutatis mutandis.*

In one embodiment, the first coat comprises:
40-98 %, such as 60-95 %, by dry weight of a polysiloxane-based binder matrix wherein more than 65 % by weight of the binder matrix is represented by polysiloxane parts,
0.1-25 %, such as 1-15 %, by dry weight of one or more biocides,
0.1-15 %, such as 1-10 %, by dry weight of one or more additives, and
0-20 %, such as 1-10 %, by dry weight of one or more pigments and fillers.

In one variant of the above, the first coat further comprises poly(oxyalkylene)-modified alcohols(s), in particular of the types and in the amounts specified further above.

### The second coat of the coating system

The second coat of the coating system is essentially as described above for the silicone-based fouling-release coat in the section "Main aspect of the invention - The fouling-release coat", (i) except that the second coat does not have - as a mandatory constituent - included biocides(s). Otherwise, the second coat is a described above, *mutatis mutandis.*

In one embodiment the second coat comprises:
40-98 %, such as 60-95%, by dry weight of a polysiloxane-based binder matrix wherein more than 65 % by weight of the binder matrix is represented by polysiloxane parts,
0.1-20 %, such as 1-10 %, by dry weight of one or more additives,
0-25 %, such as 0.1-15 %, by dry weight of one or more pigments and fillers, and
0.5-20 %, such as 1-15 %, by dry weight of one or more poly(oxyalkylene)-modified alcohols.

Within this embodiment, it is preferred that the cured second coat comprises one or more poly(oxyalkylene)-modified alcohols in an amount of 1-10 % by dry weight, such as 2-8 %, in particular 3-7 %, by dry weight of the cured second coat.

In some variants of the above, the second coat further comprises one or more biocides, in particular of the types and in the amounts specified further above in the section "Biocides".

### Second alternative aspects of the invention

An alternative embodiment of the invention relates to a silicone-based fouling-release coat comprising a polysiloxane-based binder matrix constituting at least 40 % by dry weight of said coat, wherein more than 65 % by weight of said binder matrix is represented by polysiloxane parts, said coat further comprising one or more poly(oxyalkylene)-modified hydrophobic carbon-based compounds and one or more biocides, wherein said poly(oxyalkylene)-modified hydrophobic carbon-based compounds has a surface tension above the critical micelle concentration in water of 20-55 mN/m, such as 25-50 mN/m, 30-50 mN/m or 35-50 mN/m, preferably 30-45 mN/m. The surface tension is determined as described in the Examples section.

The poly(oxyalkylene)-modified hydrophobic carbon-based compound has content of 25-99 %, such as 30-95 % or 35-90 %, in particular 40-85 % of poly(oxyalkylene). The weight content is determined as described in the Examples section.

It should be understood that all statements above, except of the mandatory presence of one or more poly(oxyalkylene)-modified alcohols, i.e. the statements and preference with respect to the polysiloxane-based binder matrix, hydrophilic modifications, pigments, fillers, additives, catalyst, solvents, biocides, etc., as well as the aspects described under the headings "A Marine Structure", "Coating compositions" and "Uses" also applies for this second alternative embodiment, with the proviso that "poly(oxyalkylene)-modified hydrophobic carbon-based compounds" should take the place of the "poly(oxyalkylene)-modified alcohols" except where otherwise defined below. Also, the present second alternative aspect of the invention may accordingly be combined with the first alternative aspect of the invention.

In one embodiment, the coat comprises 1-10 %, such as 2-8 %, in particular 3-7 %, by dry weight of said one or more poly(oxyalkylene)-modified hydrophobic carbon-based compounds and 2-20 %, such as 4-16 %, in particular 5-13 %, by dry weight of said one or more biocides.

In another embodiment, the coat comprises 1-10 %, such as 2-8 %, in particular 3-7 %, by solids volume of said one or more poly(oxyalkylene)-modified hydrophobic carbon-based compounds and 1-13 %, such as 2-10 %, in particular 3-8 %, by solids volume of said one or more biocides.

In still another embodiment, the coat comprises 1-20, such as 2-18, in particular 3-16, g/m² of said one or more poly(oxyalkylene)-modified hydrophobic carbon-based compounds and 2-35, such as 3-30, in particular 4-25, g/m² of said one or more biocides.

In yet another embodiment, the weight ratio between the one or more poly(oxyalkylene)-modified hydrophobic carbon-based compounds and the one or more biocides is in the range of 5:1 to 1:10, such as 3:1 to 1:5, in particular 2:1 to 1:3.

It should be understood that the above embodiments may be viewed independently or in combination.

The main feature of the silicon-based fouling-release coat is that of the poly(oxyalkylene)-modified hydrophobic carbon-based compounds which has a surface tension above the critical micelle concentration in water of 20-55 mN/m, such as 25-50 mN/m or 30-50 mN/m, preferably 30-45 mN/m. The surface tension is determined as described in the Examples section.

The poly(oxyalkylene)-modification is essentially as described above under the heading "Poly(oxyalkylene)-modified alcohols".

With respect to the term "hydrophobic carbon-based compound", it is intended to mean an essentially hydrophobic compound which has a carbon skeleton/backbone. Hence, hydrophobic compounds having, e.g., a polysiloxane skeleton/backbone are not intended to be encompassed by the before-mentioned expression.

Such "hydrophobic carbon-based compounds" may be rather diverse in structure, and examples hereof are sterols, fatty acids, linear and branched alcohols, aromatics such as modified phenyls and phenols, rosins such as abietic acids and derivatives thereof, poly aromatic hydrocarbons such as anthracene, etc.

In one important embodiment, the poly(oxyalkylene)-modified hydrophobic carbon-based compound is selected from the poly(oxyalkylene)-modified sterols described above under the heading "Poly(oxyalkylene)-modified alcohols.

Without being bound to any particular theory, it is believed that the poly(oxyalkylene)-modified hydrophobic carbon-based compound(s) in the coat will change the surface to become highly hydrophilic and thereby increase the biocide concentration in the outermost layer.

### Third alternative aspects of the invention

An alternative embodiment of the invention relates to a fouling release coat, in particular a silicone-based fouling-release coat comprising a polysiloxane-based binder matrix constituting at least 40 % by dry weight of said coat, wherein more than 65 % by weight of said binder matrix is represented by polysiloxane parts, said coat further comprising one or more lanolin oils and one or more biocides.

It should be understood that all statements above, except of the mandatory presence of one or more poly(oxyalkylene)-modified alcohols, i.e. the statements and preference with respect to the polysiloxane-based binder matrix, hydrophilic modifications, pigments, fillers, additives, catalyst, solvents, biocides, etc., as well as the aspects described under the headings "A Marine Structure", "Coating compositions" and "Uses" also applies for this third alternative embodiment, with the proviso that "lanolin oils" should take the place of the "poly(oxyalkylene)-modified alcohols" except where otherwise defined below. Also, the present third alternative aspect of the invention may accordingly be combined with the first alternative aspect of the invention.

In one embodiment, the coat comprises 1-10 %, such as 2-8 %, in particular 3-7 %, by dry weight of said one or more lanolin oils and 2-20 %, such as 4-16 %, in particular 5-13 %, by dry weight of said one or more biocides.

In another embodiment, the coat comprises 1-10 %, such as 2-8 %, in particular 3-7 %, by solids volume of said one or more lanolin oil and 1-13 %, such as 2-10 %, in particular 3-8 %, by solids volume of said one or more biocides.

In still another embodiment, the coat comprises 1-20, such as 2-18, in particular 3-16, g/m² of said one or more lanolin oil and 2-35, such as 3-30, in particular 4-25, g/m² of said one or more biocides.

In yet another embodiment, the weight ratio between the one or more lanolin oils and the one or more biocides is in the range of 5:1 to 1:10, such as 3:1 to 1:5, in particular 2:1 to 1:3.

It should be understood that the above embodiments may be viewed independently or in combination.

In the present context, the term "lanolin oils" should be understood as products predominantly consisting of sterols of the generic structure (II) defined further above wherein the 3-position has a free hydroxy group or wherein the 3-position carries a group of the formula W (i.e. -OH in the 3-position being replaced by -W):

R*-C(=O)-O- (W)

wherein R* is selected from C₁₂₋₃₀-alkyl, C₁₂₋₃₀-alkenyl, and C₁₂₋₃₀-alkadienyl.

In the present context, the term "predominantly consisting of" means that at least 75 % by weight of the "lanolin oils" consist of sterols of the generic structure (II) wherein the 3-position is either -OH or R*-C(=O)-O- (as defined above). Preferably, at least 80 %, such as at least 85, or at least 90 %, by solids weight of the "lanolin oils" consist of such sterols.

Lanolin oil can be prepared by fractional crystallization. When lanolin is modified by fractional crystallization, the lower molecular weight components are collected in liquid form. The higher molecular weight components form a solid; this is collectively known as lanolin wax. The average molecular weight of the liquid fraction is dependent on the solvent employed in the fractional crystallization process. For example, when isopropanol is used for extraction the mean molecular weight is approximately 360.

By liquid is meant a liquid material defined in conformity with ASTM (1996) D4359-90: Standard Test Method for Determining Whether a Material is a Liquid or a Solid, except that the test is carried out at 15 °C and not 38 °C as specified in the ASTM test method. To test whether the component comprising one or more sterol(s) and/or ester(s) thereof, the component under test is held in a tightly closed can at 15 °C. The lid is removed and the can inverted. The flow of the material from the can is observed to determine whether it is solid or a liquid. A material that flows for a total of 50 mm or less within 3 minutes is considered a solid. Otherwise it is considered a liquid.

Lanolin oil may be commercially sourced, for example, Fluilan (Croda). Argowax (Croda), EWALAN FL-50 (H. Erhard Wagner GmbH), Lanogene (Lubrizol).

In one embodiment, the coat comprises 1-10 %, such as 2-8 %, in particular 3-7 %, by dry weight of said one or more lanolin oil.

In another embodiment, the coat comprises 1-10 %, such as 2-8 %, in particular 3-7 %, by solids volume of said one or more lanolin oil.

In still another embodiment, the coat (or a corresponding coating system) comprising 1-20, such as 2-18, in particular 3-16, g/m² of said one or more lanolin oils.

In yet another embodiment, the weight ratio between the one or more lanolin oil and the one or more biocides is in the range of 5:1 to 1:10, such as 3:1 to 1:5, in particular 2:1 to 1:3.

It should be understood that the above embodiments may be views independently or in combination.

In a further embodiment (which can be applicable with the foregoing), at least one biocide is an organic biocide, preferably the one or more biocides comprises at least one of bis(1-hydroxy-2(1H)-pyridinethionato-O,S)-(T-4) zinc (zinc pyridinethione; Zinc Pyrithione), bis(1-hydroxy-2(1H)-pyridinethionato-O,S)-(T-4) copper (copper pyridinethione; Copper Pyrithione) and zinc ethylene-1,2-bis-dithiocarbamate (zinc-ethylene-N-N'-dithiocarbamate; Zineb).

Within this alternative aspect is also provided a marine structure comprising on at least a part of the outer surface thereof an outermost coating prepared from the coating composition as defined above. In particular, at least as part of the outer surface carrying the outermost coating is a submerged part of said structure.

Without being bound to any particular theory, it is believed that the lanolin oils in the coat will change the surface and increase the biocide concentration in the outermost layer.

### Fourth alternative aspects of the invention

A further alternative embodiment of the invention relates to a fouling release coat, in particular a silicone-based fouling-release coat comprising a polysiloxane-based binder matrix constituting at least 40 % by dry weight of said coat, wherein more than 65 % by weight of said binder matrix is represented by polysiloxane parts, said coat further comprising one or more acylated lanolins and one or more biocides.

It should be understood that all statements above, except of the mandatory presence of one or more poly(oxyalkylene)-modified alcohols, i.e. the statements and preference with respect to the polysiloxane-based binder matrix, hydrophilic modifications, pigments, fillers, additives, catalyst, solvents, biocides, etc., as well as the aspects described under the headings "A Marine Structure", "Coating compositions" and "Uses" also applies for this fourth alternative embodiment, with the proviso that "acylated lanolins" should take the place of the "poly(oxyalkylene)-modified alcohols" except where otherwise defined below. Also, the present fourth alternative aspect of the invention may accordingly be combined with the first alternative aspect of the invention.

In one embodiment, the coat comprises 1-10 %, such as 2-8 %, in particular 3-7 %, by dry weight of said one or more acylated lanolins and 2-20 %, such as 4-16 %, in particular 5-13 %, by dry weight of said one or more biocides.

In another embodiment, the coat comprises 1-10 %, such as 2-8 %, in particular 3-7 %, by solids volume of said one or more acylated lanolins and 1-13 %, such as 2-10 %, in particular 3-8 %, by solids volume of said one or more biocides.

In still another embodiment, the coat comprises 1-20, such as 2-18, in particular 3-16, g/m² of said one or more acylated lanolins and 2-35, such as 3-30, in particular 4-25, g/m² of said one or more biocides.

In yet another embodiment, the weight ratio between the one or more acylated lanolins and the one or more biocides is in the range of 5:1 to 1:10, such as 3:1 to 1:5, in particular 2:1 to 1:3.

It should be understood that the above embodiments may be viewed independently or in combination.

In the present context, the term "acylated lanolin" should be understood as a product predominantly consisting of sterols of the generic structure (II) defined further above wherein the 3-position carries a group of the formula Z (i.e. -OH in the 3-position being replaced by -Z):

R**-C(=O)-O- (Z)

wherein R** is selected from C₁₋₁₁-alkyl, C₁₋₁₁-alkenyl, or C₁₋₁₅ aryl.

Preferred meaning of "R**" are C₁₋₄ alkyl, such as methyl and ethyl.

In the present context, the term "predominantly consisting of" means that at least 75 % by weight of the "acylated lanolin" consist of sterols of the generic structure (II) carrying the group (Z) in the 3-position. Preferably, at least 80 %, such as at least 85, or at least 90 %, by solids weight of the "acylated lanolin" consist of such sterols.

Compositions comprising sterols and/or sterol derivatives, such as lanolin, may be acylated to prepare the component to use in the fouling resistant composition. The compositions may be acylated directly (in a one-step reaction) by mixing it with an acylating agent (an acid or an acid chloride/anhydride), or may first be hydrolyzed, and then the subsequent alcohols formed can then be acylated with the acylating agent (two-step reaction). In both reactions, the free hydroxyl groups that are present in the composition (for example the hydroxyl group on the sterol), will be partially or fully converted to acyl ester groups. In addition, the existing ester groups (for example sterol esters of long chain fatty acids, which are present in abundance in lanolin) will be partially or fully converted into the same acyl group of the acylating agent. For example, if lanolin is acetylated with acetyl chloride or acetyl anhydride, both the free sterols and a large proportion of the long-chain fatty sterol esters will become acetylated sterol esters.

Acetylated lanolin may be commercially sourced, for example: Acetylated Lanolin Standard (NK Chemicals), Acylan (Croda), Modulan (Lubrizol), YOFCO AC-25 (Nipon Fine Chemical Co.), RolanACE (Rolex Lanolin Products Limited) and Acetylated Lanolin (Wujiang Xinyi Chemical Co.).]

In one embodiment, the coat comprises 1-10 %, such as 2-8 %, in particular 3-7 %, by dry weight of said one or more acylated lanolin.

In another embodiment, the coat comprises 1-10 %, such as 2-8 %, in particular 3-7 %, by solids volume of said one or more acylated lanolin.

In still another embodiment, the coat (or a corresponding coating system) comprises 1-20, such as 2-18, in particular 3-16, g/m² of said one or more acylated lanolin.

In yet another embodiment, the weight ratio between the one or more acylated lanolin and the one or more biocides is in the range of 5:1 to 1:10, such as 3:1 to 1:5, in particular 2:1 to 1:3.

It should be understood that the above embodiments may be views independently or in combination.

In a further embodiment (which can be applicable with the foregoing), at least one biocide is an organic biocide, preferably the one or more biocides comprises at least one of bis(1-hydroxy-2(1H)-pyridinethionato-O,S)-(T-4) zinc (zinc pyridinethione; Zinc Pyrithione), bis(1-hydroxy-2(1H)-pyridinethionato-O,S)-(T-4) copper (copper pyridinethione; Copper Pyrithione) and zinc ethylene-1,2-bis-dithiocarbamate (zinc-ethylene-N-N'-dithiocarbamate; Zineb).

Within this alternative aspect is also provided a marine structure comprising on at least a part of the outer surface thereof an outermost coating prepared from the coating composition as defined above. In particular, at least as part of the outer surface carrying the outermost coating is a submerged part of said structure.

Without being bound to any particular theory, it is believed that the acylated lanolin in the coat will change the surface and increase the biocide concentration in the outermost layer.

### Application of the coating composition

The coating composition of the invention is typically applied to at least a part of the surface of a substrate.

The term "applying" is used in its normal meaning within the paint industry. Thus, "applying" is conducted by means of any conventional means, e.g. by brush, by roller, by spraying, by dipping, etc. The commercially most interesting way of "applying" the coating composition is by spraying. Hence, the coating composition is preferably sprayable. Spraying is effected by means of conventional spraying equipment known to the person skilled in the art. The coating is typically applied in a dry film thickness of 50-600 µm, such as 50-500 µm, e.g. 75-400 µm, or 100-300 µm.

Moreover, the coating composition is preferably such with respect to sag resistance cf. ASTM D 4400-99 (i.e. relating to its ability to be applied in a suitable film thickness to a vertical surface without sagging) that it exhibits sag resistance for a wet film thickness up to at least 70 µm, such as up to at least 200 µm, e.g. up to at least 300 µm, preferably up to at least 400 µm, and in particular up to at least 600 µm.

The term "at least a part of the surface of a substrate" refers to the fact that the coating composition may be applied to any fraction of the surface. For many applications, the coating composition is at least applied to the part of the substrate (e.g. a vessel) where the surface (e.g. the ship's hull) may come in contact with water, e.g. sea-water.

The term "substrate" is intended to mean a solid material onto which the coating composition is applied. The substrate typically comprises a metal such as steel, iron, aluminium, or glass-fibre reinforced polyester. In the most interesting embodiments, the substrate is a metal substrate, in particular a steel substrate. In an alternative embodiment, the substrate is a glass-fibre reinforced polyester substrate. In some embodiments, the substrate is at least a part of the outermost surface of a marine structure.

The term "surface" is used in its normal sense, and refers to the exterior boundary of an object. Particular examples of such surfaces are the surface of marine structures, such as vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc.

The surface of the substrate may either be the "native" surface (e.g. the steel surface). However, the substrate is typically coated, e.g. with an anticorrosive coating and/or a tie coat, so that the surface of the substrate is constituted by such a coating. When present, the (anticorrosive and/or tie) coating is typically applied in a total dry film thickness of 50-600 µm, such as 150-450 µm, e.g. 200-400 µm, or 20-200 µm. Alternatively, the substrate may carry a paint coat, e.g. a worn-out fouling-release paint coat, or similar.

In one important embodiment, the substrate is a metal substrate (e.g. a steel substrate) coated with an anticorrosive coating such as an anticorrosive epoxy-based coating, e.g. cured epoxy-based coating, or a shop-primer, e.g. a zinc-rich shop-primer. In another relevant embodiment, the substrate is a glass-fiber reinforced polyester substrate coated with an epoxy primer coating.

The coat of the main aspect of the invention is typically applied as the outermost coat (a.k.a. a top-coat), i.e. the coat being exposed to the environment, e.g. an aquatic environment. However, it should be understood that the coat of the main aspect of the invention alternatively may be applied as a layered system where the coat described in the main aspect of this invention will be coated with one or more layer(s) of one or more other coating compositions in order to obtain and improve control of the leaching rate of the leachable components in the coat.

This being said, the invention also relates to a method of establishing a fouling-release coating system on a surface of a substrate, comprising the sequential steps of:
a) applying one or more layers of a primer composition onto the surface of said substrate, thereby forming a primed substrate,
b) applying one or more layers of a tie-coat composition onto the surface of said primed substrate, and allowing said layer(s) to cure, thereby forming a cured tie-coat, and
c) applying one or more layers of a composition onto the surface of said cured tie-coat, and allowing said layer(s) to cure, thereby forming a cured fouling-release coat as defined hereinabove (main aspect).

In some variants of the above-mentioned method, the cured fouling-release coat may be further coated with a top-coat, e.g. a PDMS-based top-coat.

This being said, the invention also relates to a method of establishing a fouling-release coating system on a surface of a substrate (according to the first alternative aspect), comprising the sequential steps of:
a) applying one or more layers of a polysiloxane-based coating composition onto the surface of said substrate, e.g. either a native substrate or a substrate already carrying one or more coatings, as the case may be, and allowing said layer(s) to cure, thereby forming a cured first coat as defined hereinabove for the first alternative aspect, and
b) applying one or more layers of a polysiloxane-based coating composition onto the surface of said cured first coat, and allowing said layer(s) to cure, thereby forming a cured second coat as defined hereinabove for the first alternative aspect.

The invention also relates to a method of establishing a fouling-release coating system on a surface of a substrate (according to the first alternative aspect), comprising the sequential steps of:
a) applying one or more layers of a primer composition onto the surface of said substrate, and allowing said layer(s) to cure, thereby forming a primed substrate,
b) optionally applying one or more layers of a tie-coat composition onto the surface of said primed substrate, and allowing said layer(s) to cure, thereby forming a cured tie-coat;
c) applying one or more layers of a polysiloxane-based coating composition onto the surface of said primed substrate or the surface of said tie-coat, as the case may be, and allowing said layer(s) to cure, thereby forming a cured first coat as defined hereinabove for the first alternative aspect, and
d) applying one or more layers of a polysiloxane-based coating composition onto the surface of said cured first coat, and allowing said layer(s) to cure, thereby forming a cured second coat as defined hereinabove for the first alternative aspect.

The invention further relates to a method of establishing a fouling-release coating system on a surface of an aged antifouling coating system, comprising the sequential steps of:
a) applying one or more layers of a sealer/link-coat composition onto the surface of said substrate, allowing said layer(s) to cure, thereby forming a sealed substrate,
b) optionally applying one or more layers of a tie-coat composition onto the surface of said sealed substrate, and allowing said layer(s) to cure, thereby forming a cured tie-coat;
c) applying one or more layers of a polysiloxane-based coating composition onto the surface of said primed substrate or the surface of said tie-coat, as the case may be, and allowing said layer(s) to cure, thereby forming a cured first coat as defined hereinabove for the first alternative aspect, and
d) applying one or more layers of a polysiloxane-based coating composition onto the surface of said cured first coat, and allowing said layer(s) to cure, thereby forming a cured second coat as defined hereinabove for the first alternative aspect.

The invention further relates to a method of establishing a fouling-release coating system on a surface of an aged fouling-release coating system, comprising the sequential steps of:
a) optionally applying one or more layers of a tie-coat composition onto the surface of said aged fouling-release coating system, and allowing said layer(s) to cure, thereby forming a cured tie-coat;
b) applying one or more layers of a polysiloxane-based coating composition onto the surface of said primed substrate or the surface of said tie-coat, as the case may be, and allowing said layer(s) to cure, thereby forming a cured first coat as defined hereinabove for the first alternative aspect, and
c) applying one or more layers of a polysiloxane-based coating composition onto the surface of said cured first coat, and allowing said layer(s) to cure, thereby forming a cured second coat as defined hereinabove for the first alternative aspect.

### A Marine Structure

The present invention also provides a marine structure comprising on at least a part of the outer surface thereof an outermost fouling-release coating system (or (single) coat) as defined hereinabove. In particular, at least as part of the outer surface carrying the outermost coating is a submerged part of said structure.

The coating composition, the method of establishing the coating on the substrate surface, and the characteristics of the coating follow the directions given hereinabove.

In one embodiment, the fouling-release coating system of the marine structure may consist of an anticorrosive layer, a tie-coat and the fouling-release coating system as described herein.

In an alternative embodiment, the fouling-release coating composition is applied on top of a used fouling-release coating system, e.g. on top of a used polysiloxane-based fouling-release coat.

In one particular embodiment of the above marine structure, the anticorrosive layer has a total dry film thickness of 100-600 µm, such as 150-450 µm, e.g. 200-400 µm; the tie-coat has a total dry film thickness of 50-500 µm, such as 50-400 µm, e.g. 75-350 µm or 75-300 µm or 75-250 µm; and the fouling-release coating has a total dry film thickness of 20-500 µm, such as 20-400 µm, e.g. 50-300 µm.

A further embodiment of the marine structure is that where at least a part of the outermost surface of said structure is coated with a fouling-release coating system comprising
a total dry film thickness of 150-400 µm of an anticorrosive layer of an epoxy-based coating established by application of 1-4, such as 2-4, layers;
a total dry film thickness of 20-400 µm of the tie-coat established by application of 1-2 layers; and
a total dry film thickness of 20-400 µm of the fouling-release coating (according to the main aspect) established by application of 1-2 layers.

A further embodiment of the marine structure is that where at least a part of the outermost surface of said structure is coated with a fouling-release coating system (first alternative aspect) comprising
a total dry film thickness of 150-400 µm of an anticorrosive layer of an epoxy-based coating established by application of 1-4, such as 2-4, layers;
a total dry film thickness of 20-400 µm of the tie-coat established by application of 1-2 layers;
a total dry film thickness of 20-400 µm of the first coat (cf. the first alternative aspect) of the fouling-release coating established by application of 1-2 layers;
a total dry film thickness of 20-400 µm of the second coat (cf. the first alternative aspect) of the fouling-relase coating established by application of 1-2 layers.

In another embodiment of the above marine structures, the fouling-release coating is applied directly on the anticorrosive layer without the use of tie-coat.

### Coating compositions

The present invention also provides a silicone-based fouling-release coating composition comprising at least 40 % by dry weight of a polysiloxane-based binder system, wherein more than 65 % by weight of the binder system is represented by polysiloxane parts, said coating composition further comprises one or more poly(oxyalkylene)-modified alcohols and one or more biocides.

According to the invention, said coating composition comprises 1-10 %, such as 2-8 %, in particular 3-7 %, by dry weight of said one or more poly(oxyalkylene)-modified alcohols and 2-20 %, such as 4-16 %, in particular 5-13 %, by dry weight of aid one or more biocides.

In another embodiment, said coating composition comprises 1-10 %, such as 2-8 %, in particular 3-7 %, by solids volume of said one or more poly(oxyalkylene)-modified alcohols and 1-13 %, such as 2-10 %, in particular 3-8 %, by solids volume of said one or more biocides.

In yet another embodiment, the weight ratio between the one or more poly(oxyalkylene)-modified alcohols and the one or more biocides is in the range of 5:1 to 1:10, such as 3:1 to 1:5, in particular 2:1 to 1:3.

In one particular variant of each of the above embodiments, the poly(oxyalkylene)-modified alcohol is a poly(oxyalkylene)-modified sterol.

The coating composition and the constituents thereof have been described above in detail under the heading "Main aspect of the invention .." and the associated sub-headings.

### Uses

A further aspect of the invention relates to the use of the combination of one or more polysiloxane components, one or more poly(oxyalkylene)-modified alcohols, such as one or more poly(oxyalkylene)-modified sterols, and one or more biocides for improving the antifouling properties of a polysiloxane based coating composition.

### General Remarks

Although the present description and claims occasionally refer to a polysiloxane, etc., it should be understood that the coating compositions defined herein may comprise one, two or more types of the individual constituents. In such embodiments, the total amount of the respective constituent should correspond to the amount defined above for the individual constituent.

The "(s)" in the expressions: compound(s), polysiloxane(s), agent(s), etc. indicates that one, two or more types of the individual constituents may be present.

On the other hand, when the expression "one" is used, only one (1) of the respective constituent is present.

It should be understood that the expression "% dry weight" means the percentage of the respective component based on the dry weight of the coat or of the coating composition, as the case may be. For most practical purposes (hence, unless otherwise stated), the "% dry weight" when referring the cured coat is identical to the "% dry weight" of the coating composition.

### EXAMPLES

### Viscosity

In the context of the present application with claims, viscosity is measured at 25 °C in accordance with ISO 2555:1989.

### Surface tension above critical micelle concentration in water

The surface tension of a liquid/air interface can be determined by the "pendant drop method" as described in "Encyclopedia of Surface and Colloid Science" by Marcel Dekker, 2002.

Samples were prepared as 5 wt% of the compound in demineralized water mixed in a 50 mL PE bottle. At 5 wt% it is ensured that concentrations are well above the critical micelle concentration. The samples were left over-night on a shaking table to ensure saturation and/or mixing. The measurements by "pendant drop method" were performed with DataPhysics OCA-15 pus, Dynamic Contact Angle, using software SCA202 V 4.5.8. The needle was a Disposable needle SNP-D 165/137, and the volume drop was 15 microliters.

The picture from which the surface tension is calculated is taken 5 seconds after the drop is forced out of the syringe.

### Results:

| **Description** | **Tradename** | **Supplier** | **Surface tension (mN/m)** |
|---|---|---|---|
| Demi water | | | 69 |
| Lanolin oil | Fluilan (NO BHT)-LQ-(RB) | Croda | 62 |
| PEG-9 | Poly(ethylene glycol) 400 | Sigma-Aldrich | 57 |
| PEG-75 lanolin | PEG-75 Flake | NK Chemicals | 44 |
| PEG-30 lanolin | Aqualose L30 | Croda | 42 |
| Acetylated lanolin | Acetylated lanolin alcohol | NK Chemicals | 33 |
| PEG-20 sorbitan monostearate | Tween 60 | Sigma-Aldrich | 43 |
| PEG-12 nonylphenol, branched | Igepal CO-720 | Sigma-Aldrich | 32 |
| PEG-20 oleyl ether | Brij O20 | Sigma-Aldrich | 36 |
| PEG-6 stearate | PEG-6 stearate | A.E. Connock | 43 |
| PEG-12 stearate | PEG-12 stearate | A.E. Connock | 35 |
| PEG-11 branched C12-C14 secondary alcohol | Tergitol TMN-10 | Dow | 30* |
| PEG-8 branched C12-C14 secondary alcohol | Tergitol TMN-6 | Dow | 27* |
| PEG-22 oleyl alcohol | Rokanol O18 | PCC Exol | 44* |
| PEG-7 lauryl alcohol | Rokanol L7 | PCC Exol | 29* |
| PEG-6 decyl alcohol | Stepantex DA-6 | Stepan | 26.6* |
| PEG-30 castor oil | Stepantex CO-30 | Stepan | 42.4* |
| PEG-9 octyl phenol | Makon OP-9 | Stepan | 30.8* |

| | | | |
|---|---|---|---|
| *From supplier data sheet | | | |

### Weight content poly(oxyalkylene) in poly(oxyalkylene)-modified hydrophobic carbon-based compounds

The weight content poly(oxyalkylene) in poly(oxyalkylene)-modified hydrophobic-carbon based compound is determined by weight percentage of the average molecular structure.

As an example; Tergitol NP-9 from The Dow Chemical Company is an ethoxylated nonylphenol. 9 moles ethylene oxide is added, which has a molecular weight of 396 g/mol. Nonylphenol with 9 ethylene oxide units has a molecular weight of 617 g/mol making the weight content 64 %.

### Preparation method for the model paints

Part (i): binder, solvents, pigments, biocides (where applicable) and additives are mixed on a Diaf dissolver equipped with an impeller disc (e.g. 70 mm diameter impeller disc in a 1 L can for 15 minutes at 2000 rpm).

Part (ii): ethyl silicate, solvents, catalyst, and 2,4-pentanedione are mixed on a Diaf dissolver equipped with an impeller disc (e.g. 70 mm diameter impeller disc in a 1 L can for 2 minutes at 500 rpm).

Before the application, part (i) and part (ii) are mixed together with any poly(oxyalkylene)-modified steriols according to the compositions provided in the examples, where after the mix is then stirred to obtain homogeneity.

### Test Methods

### Raft Test

### Preparation of panels

An acrylic panel (150x200 mm), sandblasted on one side to facilitate adhesion of the coating, is coated with 100 µm dry film thickness (DFT) of a tie coat (HEMPASIL 27310) applied by airless spraying. After 16-30 hours of drying at room temperature the top coat paint composition is applied by doctor blade of 400 µm clearance. The panels are dried for at least 72 hours before immersion on the raft.

### Testing

Panels are tested at Singapore.

Test site in Singapore: At this test site the panels are immersed into sea water with salinity in the range of 29-31 parts per thousand at a temperature in the range of 29-31 ⁰C.

Panels are inspected ever 4-12 weeks and evaluated according to the following scale for each of the fouling types; Animals, algae and slime:

| **Level** | **Description** |
|---|---|
| Excellent | Only slime |
| Good | Algae + Animals < 10 % |
| Fair | 10 % < Algae + Animals < 25 % |
| Poor | Algae + Animals > 25 % |

### Examples

The following model paints can be prepared for testing for antifouling performance. All entries in model paints table are in weight unless otherwise stated. In the calculation of the final polysiloxane matrix, all the hydrolysable groups are presumed completely hydrolysed and reacted into a matrix through a condensation reaction with the polysiloxane binder. Therefore, the ethyl silicate contributes with 41 % of its weight to the calculations of the final polysiloxane matrix. When calculating the polysiloxane content of the binder matrix, the constituents are included in the calculations as the starting materials, however with the above-mentioned corrections for ethyl silicate. Calculation of the compound content over an area is assuming 150 µm dry film thickness of the top coat.

### Materials

| **Description** | **Trade name** | **Supplier** |
|---|---|---|
| Silanol-terminated polysiloxane | OHX-4010 Polymer | Xiameter |
| Red iron oxide | Bayferrox 130M | Lanxess |
| Fumed silica | Aerosil R972 | Evonik |
| Polyamide wax | Crayvallac super | Arkema |
| Tetraethyl orthosilicate | Silikat TES 40 WN | Wacker Chemie |
| Copper Pyrithione | Copper Omadine | Lonza |
| Xylene | | |
| Dibutyltin dilaurate | TIB KAT 218 | TIB Chemicals |
| 2,4-Pentanedione | Acetylaceton | Wacker Chemie |
| Acetylated lanolin | Acetylated lanolin alcohol | NK Chemicals |
| PEG-30 lanolin | Aqualose L30 | Croda |
| PEG-75 lanolin | PEG 75 Flake | NK Chemicals |
| Lanolin oil (liquid) | Fluilan (NO BHT)-LQ-(RB) | Croda |
| PEG-20 lanolin | Polychol 20 | Croda |
| PEG-14 tristyrylphenol | Serdox NSP 14 | Elementis |
| PEG-8 tributylphenol | Sapogenat T 080 | Clariant |
| PEG-13 tributylphenol | Sapogenat T 130 | Clariant |
| PEG-7 linear C12-15 alcohol | Serdox NES 7 | Elementis |
| PEG-7 branched C13 alcohol | Serdox NRL 7 E | Elementis |
| PEG-20 sorbitan trioleate | Tween 85 | Sigma Aldrich |
| PEG-10 oleyl alcohol | Brij O10 | Sigma Aldrich |
| Lanolin | Araowax | Croda |
| 1-dodecanol | 1-Dodecanol | Sigma Aldrich |
| PEG-8 | Polyglycol M 350 | Clariant |
| PEG-17 | Polyglycol M 750 | Clariant |

### Coating compositions

**Table 1**

| | **Ex. 1.1** | **Ref. 1.1** | **Ex. 1.2** | **Ref. 1.2** | **Ref. 1.3** | **Ref. 1.4** | **Ref. 1.5** | **Ref. 1.6** |
|---|---|---|---|---|---|---|---|---|
| Silanol-terminated polysiloxane | 59.2 | 59.2 | 59.2 | 59.2 | 59.2 | 59.2 | 59.2 | 59.2 |
| Red iron oxide | 3.6 | 3.6 | 3.6 | 3.6 | 3.6 | 3.6 | 3.6 | 3.6 |
| Fumed silica | 1 | 1 | 1 | 1 | 1 | 1 | 1 | 1 |
| Polyamide wax | 0.7 | 0.7 | 0.7 | 0.7 | 0.7 | 0.7 | 0.7 | 0.7 |
| Tetraethyl orthosilicate | 2.3 | 2.3 | 2.3 | 2.3 | 2.3 | 2.3 | 2.3 | 2.3 |
| Xylene | 23.4 | 23.4 | 23.4 | 23.4 | 23.4 | 23.4 | 23.4 | 23.4 |
| Dibutyltin dilaurate | 0.4 | 0.4 | 0.4 | 0.4 | 0.4 | 0.4 | 0.4 | 0.4 |
| 2,4-Pentanedione | 1.2 | 1.2 | 1.2 | 1.2 | 1.2 | 1.2 | 1.2 | 1.2 |
| Copper pyrithione | 8 | | 8 | | 8 | | 8 | |
| PEG-30 lanolin | 3.6 | 3.6 | | | | | | |
| PEG-75 lanolin | | | 3.6 | 3.6 | | | | |
| Acetylated lanolin | | | | | 3.6 | 3.6 | | |
| Lanolin oil | | | | | | | 3.6 | 3.6 |
| | | | | | | | | |
| Copper pyrithione (g/m²) | 17.1 | 0.0 | 17.1 | 0.0 | 17.1 | 0.0 | 17.1 | 0.0 |
| Lanolin compound (g/m²) | 7.7 | 8.2 | 7.7 | 8.2 | 7.7 | 8.2 | 7.7 | 8.2 |
| Copper pyrithione (% solid volume) | 6.5 | 0.0 | 6.5 | 0.0 | 6.5 | 0.0 | 6.5 | 0.0 |
| Lanolin compound (% solid volume) | 5.1 | 5.5 | 5.1 | 5.5 | 5.1 | 5.5 | 5.1 | 5.5 |
| Copper pyrithione (% dry weight) | 10.5 | 0.0 | 10.5 | 0.0 | 10.5 | 0.0 | 10.5 | 0.0 |
| Lanolin compound (% dry weight) | 5.3 | 4.7 | 5.3 | 4.7 | 5.3 | 4.7 | 5.3 | 4.7 |
| | | | | | | | | |
| 8 weeks in Singapore | Good | Poor | Good | Poor | Fair | Poor | Fair | Poor |

As one would expect, all examples exhibit improved fouling resistance by addition of biocide(s) compared to the reference example without a biocide(s). Moreover, as seen from Examples 1.1 and 1.2 the fouling resistance is greatly improved when the coating contains poly(oxyalkylene)-modified alcohols in the form of poly(oxyalkylene)-modified sterols ("PEG-30 lanolin" and "PEG-75 lanolin"). Also, an improvement is observed (although to a lesser extent) when the coating contains "acetylated lanolin" or "lanolin oils".

**Table 2**

| Example No. | **Ex. 2.1** | **Ref. 2.1** | **Ex. 2.2** | **Ref. 2.2** | **Ex. 2.3** | **Ref. 2.3** |
|---|---|---|---|---|---|---|
| Silanol-terminated polysiloxane | 59.2 | 59.2 | 59.2 | 59.2 | 59.2 | 59.2 |
| Red iron oxide | 3.6 | 3.6 | 3.6 | 3.6 | 3.6 | 3.6 |
| Fumed silica | 1 | 1 | 1 | 1 | 1 | 1 |
| Polyamide wax | 0.7 | 0.7 | 0.7 | 0.7 | 0.7 | 0.7 |
| Tetraethyl orthosilicate | 2.3 | 2.3 | 2.3 | 2.3 | 2.3 | 2.3 |
| Xylene | 23.4 | 23.4 | 23.4 | 23.4 | 23.4 | 23.4 |
| Dibutyltin dilaurate | 0.4 | 0.4 | 0.4 | 0.4 | 0.4 | 0.4 |
| 2,4-Pentanedione | 1.2 | 1.2 | 1.2 | 1.2 | 1.2 | 1.2 |
| Copper pyrithione | 8 | | 8 | | 8 | |
| PEG-7 linear C12-15 alcohol | 3.6 | 3.6 | | | | |
| PEG-7 branched C13 alcohol | | | 3.6 | 3.6 | | |
| PEG-10 oleyl alcohol | | | | | 3.6 | 3.6 |
| PEG-20 sorbitan trioleate | | | | | | |
| 1-dodecanol | | | | | | |
| PEG-8 | | | | | | |
| PEG-17 | | | | | | |
| | | | | | | |
| Copper pyrithione (g/m²) | 17.1 | 0.0 | 17.1 | 0.0 | 17.1 | 0.0 |
| Additive (g/m²) | 7.7 | 8.2 | 7.7 | 8.2 | 7.7 | 8.2 |
| Copper pyrithione (% solid volume) | 6.5 | 0.0 | 6.5 | 0.0 | 6.5 | 0.0 |
| Additive (% solid volume) | 5.1 | 5.5 | 5.1 | 5.5 | 5.1 | 5.5 |
| Copper pyrithione (% dry weight) | 10.5 | 0.0 | 10.5 | 0.0 | 10.5 | 0.0 |
| Additive (% dry weight) | 5.3 | 4.7 | 5.3 | 4.7 | 5.3 | 4.7 |
| | | | | | | |
| 7 weeks in Spain | Fair | Poor | Fair | Poor | Good | Poor |

**Table 2 (continued)**

| Example No. | **Ex. 2.4** | **Ref. 2.4** | **Ref. 2.5** | **Ref. 2.6** | **Ref. 2.7** | **Ref. 2.8** | **Ref. 2.9** |
|---|---|---|---|---|---|---|---|
| Silanol-terminated polysiloxane | 59.2 | 59.2 | 59.2 | 59.2 | 59.2 | 59.2 | 59.2 |
| Red iron oxide | 3.6 | 3.6 | 3.6 | 3.6 | 3.6 | 3.6 | 3.6 |
| Fumed silica | 1 | 1 | 1 | 1 | 1 | 1 | 1 |
| Polyamide wax | 0.7 | 0.7 | 0.7 | 0.7 | 0.7 | 0.7 | 0.7 |
| Tetraethyl orthosilicate | 2.3 | 2.3 | 2.3 | 2.3 | 2.3 | 2.3 | 2.3 |
| Xylene | 23.4 | 23.4 | 23.4 | 23.4 | 23.4 | 23.4 | 23.4 |
| Dibutyltin dilaurate | 0.4 | 0.4 | 0.4 | 0.4 | 0.4 | 0.4 | 0.4 |
| 2,4-Pentanedione | 1.2 | 1.2 | 1.2 | 1.2 | 1.2 | 1.2 | 1.2 |
| Copper pyrithione | 8 | | 8 | 8 | 8 | 8 | |
| PEG-7 linear C12-15 alcohol | | | | | | | |
| PEG-7 branched C13 alcohol | | | | | | | |
| PEG-10 oleyl alcohol | | | | | | | |
| PEG-20 sorbitan trioleate | 3.6 | 3.6 | | | | | |
| 1-dodecanol | | | 3.6 | | | | |
| PEG-8 | | | | 3.6 | | | |
| PEG-17 | | | | | 3.6 | | |
| | | | | | | | |
| Copper pyrithione (g/m²) | 17.1 | 0.0 | 17.1 | 17.1 | 17.1 | 17.1 | 0.0 |
| Additive (g/m²) | 7.7 | 8.2 | 7.7 | 7.7 | 7.7 | 0.0 | 0.0 |
| Copper pyrithione (% solid volume) | 6.5 | 0.0 | 6.5 | 6.5 | 6.5 | 6.5 | 0.0 |
| Additive (% solid volume) | 5.1 | 5.5 | 5.1 | 5.1 | 5.1 | 0.0 | 0.0 |
| Copper pyrithione (% dry weight) | 10.5 | 0.0 | 10.5 | 10.5 | 10.5 | 10.5 | 0.0 |
| Additive (% dry weight) | 5.3 | 4.7 | 5.3 | 5.3 | 5.3 | 0.0 | 0.0 |
| | | | | | | | |
| 7 weeks in Spain | Fair | Poor | Poor | Poor | Poor | Poor | Poor |

Table 2 illustrates the effect of the poly(oxyalkylene)-modified alcohol in the form of alkyl ether ethoxylates ("PEG-7 linear C12-15 alcohol", "PEG-7 branched C13 alcohol", "PEG-10 oleyl alcohol") or modified sorbitan ("sorbitan trioleate") compared to the lack of effect when only adding the alcohol ("1-dodecanol") or the poly(oxyalkylene) part ("PEG-8" and "PEG-17"): Examples 2.1, 2.2, 2.3 and 2.4 all exhibit improved fouling resistance compared to the references without a biocide (refs. 2.1, 2.2, 2.3 and 2.4). Further, when only adding the alcohol (ref 2.5) no improved effect is obtained when adding the biocide. The same applies when only adding the poly(oxyalkylene) part (refs. 2.6 and 2.7). Refs 2.8 and 2.9 completely lack the poly(oxyalkylene)-modified alcohol or any of its constituents, and it is seen from these tests that there is no effect by adding the biocide alone.

**Table 3**

| Example No. | **Ex. 3.1** | **Ref. 3.1** | **Ex. 3.2** | **Ref. 3.2** | **Ex. 3.3** | **Ref. 3.3** | **Ex. 3.4** | **Ref. 3.4** |
|---|---|---|---|---|---|---|---|---|
| Silanol-terminated polysiloxane | 59.2 | 59.2 | 59.2 | 59.2 | 59.2 | 59.2 | 59.2 | 59.2 |
| Red iron oxide | 3.6 | 3.6 | 3.6 | 3.6 | 3.6 | 3.6 | 3.6 | 3.6 |
| Fumed silica | 1 | 1 | 1 | 1 | 1 | 1 | 1 | 1 |
| Polyamide wax | 0.7 | 0.7 | 0.7 | 0.7 | 0.7 | 0.7 | 0.7 | 0.7 |
| Tetraethyl orthosilicate | 2.3 | 2.3 | 2.3 | 2.3 | 2.3 | 2.3 | 2.3 | 2.3 |
| Xylene | 23.4 | 23.4 | 23.4 | 23.4 | 23.4 | 23.4 | 23.4 | 23.4 |
| Dibutyltin dilaurate | 0.4 | 0.4 | 0.4 | 0.4 | 0.4 | 0.4 | 0.4 | 0.4 |
| 2,4-Pentanedione | 1.2 | 1.2 | 1.2 | 1.2 | 1.2 | 1.2 | 1.2 | 1.2 |
| Copper pyrithione | 8 | | 8 | | 8 | | 8 | |
| PEG-14 tristyrylphenol | 3.6 | 3.6 | | | | | | |
| PEG-8 tributylphenol | | | 3.6 | 3.6 | | | | |
| PEG-13 tributylphenol | | | | | 3.6 | 3.6 | | |
| PEG-20 lanolin | | | | | | | 3.6 | 3.6 |
| PEG-8 | | | | | | | | |
| PEG-17 | | | | | | | | |
| Lanolin wax | | | | | | | | |
| | | | | | | | | |
| Copper pyrithione (g/m²) | 17.1 | 0.0 | 17.1 | 0.0 | 17.1 | 0.0 | 17.1 | 0.0 |
| Additive (g/m²) | 7.7 | 8.2 | 7.7 | 8.2 | 7.7 | 8.2 | 7.7 | 8.2 |
| Copper pyrithione (% solid volume) | 6.5 | 0.0 | 6.5 | 0.0 | 6.5 | 0.0 | 6.5 | 0.0 |
| Additive (% solid volume) | 5.1 | 5.5 | 5.1 | 5.5 | 5.1 | 5.5 | 5.1 | 5.5 |
| Copper pyrithione (% dry weight) | 10.5 | 0.0 | 10.5 | 0.0 | 10.5 | 0.0 | 10.5 | 0.0 |
| Additive (% dry weight) | 5.3 | 4.7 | 5.3 | 4.7 | 5.3 | 4.7 | 5.3 | 4.7 |
| | | | | | | | | |
| 7 weeks in Spain | Fair | Poor | Fair | Poor | Good | Poor | Excellent | Fair |

**Table 3 (continued)**

| Example No. | **Ref. 3.5** | **Ref. 3.6** | **Ref. 3.7** | **Ref. 3.8** | **Ref. 3.9** |
|---|---|---|---|---|---|
| Silanol-terminated polysiloxane | 59.2 | 59.2 | 59.2 | 59.2 | 59.2 |
| Red iron oxide | 3.6 | 3.6 | 3.6 | 3.6 | 3.6 |
| Fumed silica | 1 | 1 | 1 | 1 | 1 |
| Polyamide wax | 0.7 | 0.7 | 0.7 | 0.7 | 0.7 |
| Tetraethyl orthosilicate | 2.3 | 2.3 | 2.3 | 2.3 | 2.3 |
| Xylene | 23.4 | 23.4 | 23.4 | 23.4 | 23.4 |
| Dibutyltin dilaurate | 0.4 | 0.4 | 0.4 | 0.4 | 0.4 |
| 2,4-Pentanedione | 1.2 | 1.2 | 1.2 | 1.2 | 1.2 |
| Copper pyrithione | 8 | 8 | 8 | 8 | |
| PEG-14 tristyrylphenol | | | | | |
| PEG-8 tributylphenol | | | | | |
| PEG-13 tributylphenol | | | | | |
| PEG-20 lanolin | | | | | |
| PEG-8 | 3.6 | | | | |
| PEG-17 | | 3.6 | | | |
| Lanolin wax | | | 3.6 | | |
| | | | | | |
| Copper pyrithione (g/m²) | 17.1 | 17.1 | 17.1 | 17.1 | 0.0 |
| Additive (g/m²) | 7.7 | 7.7 | 7.7 | 0.0 | 0.0 |
| Copper pyrithione (% solid volume) | 6.5 | 6.5 | 6.5 | 6.5 | 0.0 |
| Additive (% solid volume) | 5.1 | 5.1 | 5.1 | 0.0 | 0.0 |
| Copper pyrithione (% dry weight) | 10.5 | 10.5 | 10.5 | 10.5 | 0.0 |
| Additive (% dry weight) | 5.3 | 5.3 | 5.3 | 0.0 | 0.0 |
| | | | | | |
| 7 weeks in Spain | Poor | Poor | Fair | Poor | Poor |

Table 3 illustrates the effect of the poly(oxyalkylene)-modified alcohol in the form of poly(oxyalkylene)-modified phenols ("PEG-14 tristyrylphenol", "PEG-8 tributylphenol", "PEG-13 tristyrylphenol") or poly(oxyalkylene)-modified sterol ("PEG-20 lanolin") compared to the lack of effect when only adding the poly(oxyalkylene) part ("PEG-8" and "PEG-17"): Examples 3.1, 3.2 and 3.3 all exhibit improved fouling resistance compared to the references without a biocide (refs. 3.1, 3.2 and 3.3). Further, when only adding the poly(oxyalkylene) part (refs. 3.5 and 3.6) no improved effect is obtained when adding the biocide. Refs 3.11 and 3.12 completely lack the poly(oxyalkylene)-modified alcohol or any of its constituents, and it is seen from these tests that there is no effect by adding the biocide alone.

## Claims

1. A silicone-based fouling-release coat comprising a polysiloxane-based binder matrix constituting at least 40 % by dry weight of said coat, wherein more than 65 % by weight of said binder matrix is represented by polysiloxane parts, said coat further comprising one or more poly(oxyalkylene)-modified alcohols and one or more biocides, wherein said one or more poly(oxyalkylene)-modified alcohols have the general formula (I):
(POA-O-)_{X}-R-(-O-FA)_{Y} (I)
wherein
each POA represents a poly(oxyalkylene) moiety,
each FA represents a C₈₋₃₀ fatty acyl moiety,
R represents the organic residue of an alcohol R(OH)_{X+Y}, said organic residue having 2-50 carbon atoms, and
X is 1-5, Y is 0-10 and X+Y is 1-12;
wherein the coat comprises 1-20 g/m² of said one or more poly(oxyalkylene)-modified alcohols and 2-35 g/m² of said one or more biocides.

2. The fouling-release coat according to claim 1, said coat comprising 1-10 % by dry weight of said one or more poly(oxyalkylene)-modified alcohols and 2-20 % by dry weight of said one or more biocides.

3. The fouling-release coat according to any one of the preceding claims, said coat comprising 1-10 % by solids volume of said one or more poly(oxyalkylene)-modified alcohols and 1-13 % by solids volume of said one or more biocides.

4. The fouling-release coat according to any one of the preceding claims, wherein the weight ratio between the one or more poly(oxyalkylene)-modified alcohols and the one or more biocides is in the range of 5:1 to 1:10.

5. The fouling-release coat according to any one of the preceding claims, wherein the organic residue, R, has 2-50 carbon atoms and has only linear, branched and/or unsaturated moieties.

6. The fouling-release coat according to any one of the preceding claims, wherein the organic residue, R, has 2-50 carbon atoms and is selected from substituted phenols, sorbitans or sterols.

7. The fouling-release coat according to any one of the preceding claims, wherein the poly(oxyalkylene)-modified alcohol for formula (I) is a poly(oxyalkylene)-modified sterol wherein the alcohol is a sterol, and X+Y is 1.

8. The fouling-release coat according to any one of the preceding claims, wherein the poly(oxyalkylene)-modified alcohol is a poly(oxyalkylene)-modified phenol.

9. The fouling-release coat according to any one of the preceding claims, wherein the poly(oxyalkylene)-modified alcohol is a poly(oxyalkylene)-modified sorbitan trioleate wherein the alcohol has the generic structure (IV): 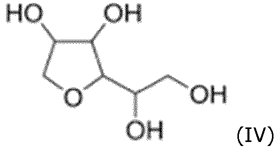 and X is 1 and Y is 3.

10. The fouling-release coat according to any one of the preceding claims, wherein the alcohol of the poly(oxyalkylene)-modified alcohol is selected from C₆₋₃₀ saturated straight or branched chain alcohols.

11. The fouling-release coat according to any one of the preceding claims, wherein the one or more biocides comprises at least one of bis(1-hydroxy-2(1H)-pyridinethionato-O,S)-(T-4) zinc (zinc pyridinethione), bis(1-hydroxy-2(1H)-pyridinethionato-O,S)-(T-4) copper (copper pyridinethione) and zinc ethylene-1,2-bis-dithiocarbamate (zinc-ethylene-N-N'-dithiocarbamate).

12. A silicone-based fouling-release coating system comprising one or more coats of a polysiloxane-based binder matrix constituting at least 40 % by dry weight, and more than 65 % by weight of the binder matrix being represented by polysiloxane parts, wherein one or more coats further comprise one or more poly(oxyalkylene)-modified alcohols of the general formula (I), (POA-O-)_{X}-R-(-O-FA)_{Y}, as specified in any one of the claims 1-11, and one or more coats further comprise one or more biocides, and wherein the coating system comprises 1-20 g/m² of said one or more poly(oxyalkylene)-modified alcohols and 2-35 g/m² of said one or more biocides.

13. The fouling-release coat according to claim 12, wherein the one or more biocides comprises at least one of bis(1-hydroxy-2(1H)-pyridinethionato-O,S)-(T-4) zinc (zinc pyridinethione), bis(1-hydroxy-2(1H)-pyridinethionato-O,S)-(T-4) copper (copper pyridinethione) and zinc ethylene-1,2-bis-dithiocarbamate (zinc-ethylene-N-N'-dithiocarbamate).

14. A marine structure comprising on at least a part of the outer surface thereof (i) a fouling-release coat as defined in any one of the claims 1-11, or (ii) a fouling-release coating system according to any one of the claims 12-13.

15. A silicone-based fouling-release coating composition comprising at least 40 % by dry weight of a polysiloxane-based binder system, wherein more than 65 % by weight of the binder system is represented by polysiloxane parts, said coating composition further comprises one or more poly(oxyalkylene)-modified alcohols of the general formula (I), (POA-O-_{)X}-R-(-O-FA_{)Y}, as specified in any one of the claims 1-11, and one or more biocides, said coating composition comprising
1-10 % by dry weight of said one or more poly(oxyalkylene)-modified alcohols and 2-20 % by dry weight of said one or more biocides; and/or comprising 1-10 % by solids volume of said one or more poly(oxyalkylene)-modified alcohols and 1-13 % by solids volume of said one or more biocides; and/or wherein the weight ratio between the one or more poly(oxyalkylene)-modified alcohols and the one or more biocides is in the range of 5:1 to 1:10; wherein optionally for all coating compositions encompassed in claim 15, the one or more biocides comprises at least one of bis(1-hydroxy-2(1H)-pyridinethionato-O,S)-(T-4) zinc (zinc pyridinethione), bis(1-hydroxy-2(1H)-pyridinethionato-O,S)-(T-4) copper (copper pyridinethione) and zinc ethylene-1,2-bis-dithiocarbamate (zinc-ethylene-N-N'-dithiocarbamate).

## Patentansprüche

1. Bewuchsablösende Beschichtung auf Silikonbasis, umfassend eine Bindemittelmatrix auf Polysiloxanbasis, die wenigstens 40 % des Trockengewichts der Beschichtung ausmacht, wobei mehr als 65 Gew.-% der Bindemittelmatrix aus Polysiloxananteilen bestehen, wobei die Beschichtung ferner einen oder mehrere Poly(oxyalkylen)-modifizierte Alkohole und ein oder mehrere Biozide umfasst, wobei der eine oder die mehreren Poly(oxyalkylen)-modifizierten Alkohole die allgemeine Formel (I) aufweisen:
(POA-O-)_{X}-R-(-O-FA)_{Y} (I)
wobei
POA jeweils für eine Poly(oxyalkylen)-Einheit steht,
FA jeweils für eine C₈₋₃₀-Fettacyl-Einheit steht,
R für den organischen Rest eines Alkohols R(OH)_{X+Y} steht, wobei der organische Rest 2 bis 50 Kohlenstoffatome aufweist, und
X 1 bis 5 ist, Y 0 bis 10 ist und X+Y 1 bis 12 ist;
wobei die Beschichtung 1 bis 20 g/m² des einen oder der mehreren Poly(oxyalkylen)-modifizierten Alkohole und 2 bis 35 g/m² des einen oder der mehreren Biozide umfasst.

2. Bewuchsablösende Beschichtung nach Anspruch 1, wobei die Beschichtung 1 bis 10 %, bezogen auf das Trockengewicht, des einen oder der mehreren Poly(oxyalkylen)-modifizierten Alkohole und 2 bis 20 %, bezogen auf das Trockengewicht, des einen oder der mehreren Biozide umfasst.

3. Bewuchsablösende Beschichtung nach einem der vorhergehenden Ansprüche, wobei die Beschichtung 1 bis 10 %, bezogen auf das Feststoffvolumen, des einen oder der mehreren Poly(oxyalkylen)-modifizierten Alkohole und 1 bis 13 %, bezogen auf das Feststoffvolumen, des einen oder der mehreren Biozide umfasst.

4. Bewuchsablösende Beschichtung nach einem der vorhergehenden Ansprüche, wobei das Gewichtsverhältnis zwischen dem einen oder den mehreren Poly(oxyalkylen)-modifizierten Alkohole und dem einen oder den mehreren Bioziden im Bereich von 5:1 bis 1:10 liegt.

5. Bewuchsablösende Beschichtung nach einem der vorhergehenden Ansprüche, wobei der organische Rest, R, 2 bis 50 Kohlenstoffatome aufweist und nur lineare, verzweigte und/oder ungesättigte Einheiten aufweist.

6. Bewuchsablösende Beschichtung nach einem der vorhergehenden Ansprüche, wobei der organische Rest, R, 2 bis 50 Kohlenstoffatome aufweist und aus substituierten Phenolen, Sorbitanen oder Sterolen ausgewählt ist.

7. Bewuchsablösende Beschichtung nach einem der vorhergehenden Ansprüche, wobei der Poly(oxyalkylen)-modifizierte Alkohol für die Formel (I) ein Poly(oxyalkylen)-modifiziertes Sterol ist, wobei der Alkohol ein Sterol ist und X+Y 1 ist.

8. Bewuchsablösende Beschichtung nach einem der vorhergehenden Ansprüche, wobei der Poly(oxyalkylen)-modifizierte Alkohol ein Poly(oxyalkylen)-modifiziertes Phenol ist.

9. Bewuchsablösende Beschichtung nach einem der vorhergehenden Ansprüche, wobei der Poly(oxyalkylen)-modifizierte Alkohol ein Poly(oxyalkylen)-modifiziertes Sorbitantrioleat ist, wobei der Alkohol die generische Struktur (IV) aufweist: 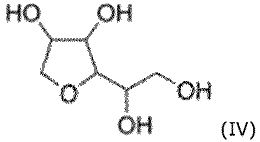 und X 1 ist und Y 3 ist.

10. Bewuchsablösende Beschichtung nach einem der vorhergehenden Ansprüche, wobei der Alkohol des Poly(oxyalkylen)-modifizierten Alkohols aus gesättigten gerad- oder verzweigtkettigen C₆₋₃₀₋Alkoholen ausgewählt ist.

11. Bewuchsablösende Beschichtung nach einem der vorhergehenden Ansprüche, wobei das eine oder die mehreren Biozide wenigstens eines aus Bis(1-hydroxy-2(1H)-pyridinthionato-O,S)-(T-4)-Zink (Zink-Pyridinthion), Bis(1-hydroxy-2(1H)-pyridinthionato-O,S)-(T-4)-Kupfer (Kupfer-Pyridinthion) und Zinkethylen-1,2-bis-dithiocarbamat (Zinkethylen-N-N'-dithiocarbamat) umfasst.

12. Bewuchsablösendes Beschichtungssystem auf Silikonbasis, umfassend eine oder mehrere Beschichtungen aus einer Bindemittelmatrix auf Polysiloxanbasis, die wenigstens 40 % des Trockengewichts ausmacht, wobei mehr als 65 % des Gewichts der Bindemittelmatrix aus Polysiloxananteilen bestehen, wobei die eine oder die mehreren Beschichtungen ferner einen oder mehrere Poly(oxyalkylen)-modifizierte Alkohole der allgemeinen Formel (I), (POA-O-)_{X}-R-(-O-FA)_{Y}, wie in einem der Ansprüche 1 bis 11 angegeben, umfassen und wobei die eine oder die mehreren Beschichtungen ferner ein oder mehrere Biozide umfassen und wobei das Beschichtungssystem 1 bis 20 g/m² des einen oder der mehreren Poly(oxyalkylen)-modifizierten Alkohole und 2 bis 35 g/m² des einen oder der mehreren Biozide umfasst.

13. Bewuchsablösende Beschichtung nach Anspruch 12, wobei das eine oder die mehreren Biozide wenigstens eines aus Bis(1-hydroxy-2(1H)-pyridinthionato-O,S)-(T-4)-Zink (Zink-Pyridinthion), Bis(1-hydroxy-2(1H)-pyridinthionato-O,S)-(T-4)-Kupfer (Kupfer-Pyridinthion) und Zinkethylen-1,2-bis-dithiocarbamat (Zinkethylen-N-N'-dithiocarbamat) umfassen.

14. Meeresstruktur, umfassend auf wenigstens einem Teil der Außenfläche davon (i) eine bewuchsablösende Beschichtung, wie sie in einem der Ansprüche 1 bis 11 definiert wird, oder (ii) ein bewuchsablösendes Beschichtungssystem nach einem der Ansprüche 12 bis 13.

15. Bewuchsablösende Beschichtungszusammensetzung auf Silikonbasis, umfassend wenigstens 40 %, bezogen auf das Trockengewicht, eines Bindemittelsystems auf Polysiloxanbasis, wobei mehr als 65 Gew.-% des Bindemittelsystems aus Polysiloxananteilen bestehen, wobei die Beschichtungszusammensetzung ferner einen oder mehrere Poly(oxyalkylen)-modifizierte Alkohole der allgemeinen Formel (I), (POA-O-)_{X}-R-(-O-FA)_{Y}, wie in einem der Ansprüche 1 bis 11 angegeben, und ein oder mehrere Biozide umfasst, wobei die Beschichtungszusammensetzung 1 bis 10 %, bezogen auf das Trockengewicht, des einen oder der mehreren Poly(oxyalkylen)-modifizierten Alkohole und 2 bis 20 %, bezogen auf das Trockengewicht, des einen oder der mehreren Biozide umfasst; und/oder wobei sie 1 bis 10 %, bezogen auf das Feststoffvolumen, des einen oder der mehreren Poly(oxyalkylen)-modifizierten Alkohole und 1 bis 13 %, bezogen auf das Feststoffvolumen, des einen oder der mehreren Biozide umfasst; und/oder wobei das Gewichtsverhältnis zwischen dem einen oder den mehreren Poly(oxyalkylen)-modifizierten Alkoholen und dem einen oder den mehreren Bioziden im Bereich von 5:1 bis 1:10 liegt; wobei optional bei allen Beschichtungszusammensetzungen, die in Anspruch 15 umfasst sind, das eine oder die mehreren Biozide wenigstens eines aus Bis (1-hydroxy-2(1H)-pyridinthionato-O,S)-(T-4)-Zink (Zink-Pyridinthion), Bis(1-hydroxy-2(1H)-pyridinthionato-O,S)-(T-4)-Kupfer (Kupfer-Pyridinthion) und Zinkethylen-1,2-bis-dithiocarbamat (Zinkethylen-N-N'-dithiocarbamat) umfassen.

## Revendications

1. Revêtement anti-salissures à base de silicone comprenant une matrice liante à base de polysiloxane constituant au moins 40 % en poids sec dudit revêtement, dans lequel plus de 65 % en poids de ladite matrice liante sont représentés par des parties polysiloxane, ledit revêtement comprenant en outre un ou plusieurs alcools modifiés par un poly(oxyalkylène) et un ou plusieurs biocides, dans lequel ledit ou lesdits alcools modifiés par un poly(oxyalkylène) répondent à la formule générale (I) :
(POA-O-)_{X}-R-(-O-FA)_{Y} (I)
dans laquelle
chaque POA représente un fragment poly(oxyalkylène),
chaque FA représente un fragment acyle gras en C₈₋₃₀,
R représente le résidu organique d'un alcool R(OH)_{X+Y}, ledit résidu organique ayant de 2 à 50 atomes de carbone, et
X vaut de 1 à 5, Y vaut de 0 à 10 et X+Y vaut de 1 à 12 ;
dans lequel le revêtement comprend de 1 à 20 g/m² dudit ou desdits alcools modifiés par un poly(oxyalkylène) et de 2 à 35 g/m² dudit ou desdits biocides.

2. Revêtement anti-salissures selon la revendication 1, ledit revêtement comprenant de 1 à 10 % en poids sec dudit ou desdits alcools modifiés par un poly(oxyalkylène) et de 2 à 20 % en poids sec dudit ou desdits biocides.

3. Revêtement anti-salissures selon l'une quelconque des revendications précédentes, ledit revêtement comprenant de 1 à 10 % en volume de matières solides dudit ou desdits alcools modifiés par un poly(oxyalkylène) et de 1 à 13 % en volume de matières solides dudit ou desdits biocides.

4. Revêtement anti-salissures selon l'une quelconque des revendications précédentes, dans lequel le rapport pondéral entre le ou les alcools modifiés par un poly(oxyalkylène) et le ou les biocides est compris dans la plage de 5:1 à 1:10.

5. Revêtement anti-salissures selon l'une quelconque des revendications précédentes, dans lequel le résidu organique, R, comprend de 2 à 50 atomes de carbone et ne comprend que des fragments linéaires, ramifiées et/ou insaturées.

6. Revêtement anti-salissures selon l'une quelconque des revendications précédentes, dans lequel le résidu organique, R, comprend de 2 à 50 atomes de carbone et est choisi parmi les phénols, les sorbitanes ou les stérols substitués.

7. Revêtement anti-salissures selon l'une quelconque des revendications précédentes, dans lequel l'alcool modifié par un poly(oxyalkylène) pour la formule (I) est un stérol modifié par un poly(oxyalkylène) dans lequel l'alcool est un stérol, et X+Y vaut 1.

8. Revêtement anti-salissures selon l'une quelconque des revendications précédentes, dans lequel l'alcool modifié par un poly(oxyalkylène) est un phénol modifié par un poly(oxyalkylène).

9. Revêtement anti-salissures selon l'une quelconque des revendications précédentes, dans lequel l'alcool modifié par un poly(oxyalkylène) est un trioléate de sorbitane modifié par un poly(oxyalkylène) dans lequel l'alcool répond à la structure générique (IV) : 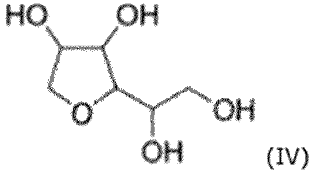 et X vaut 1 et Y vaut 3.

10. Revêtement anti-salissures selon l'une quelconque des revendications précédentes, dans lequel l'alcool modifié par un poly(oxyalkylène) est sélectionné parmi les alcools saturés à chaîne linéaire ou ramifiée en C₆₋₃₀.

11. Revêtement anti-salissures selon l'une quelconque des revendications précédentes, dans lequel le ou les biocides comprennent au moins un parmi le bis(1-hydroxy-2(1H)-pyridinethionato-O,S)-(T-4) de zinc (pyridinethione de zinc), le bis (1-hydroxy-2(1H)-pyridinethionato-0,S)-(T-4) de cuivre (pyridinethione de cuivre) et l'éthylène-1,2-bis-dithiocarbamate de zinc (éthylène-N-N'-dithiocarbamate de zinc).

12. Système de revêtement anti-salissures à base de silicone comprenant un ou plusieurs revêtements d'une matrice liante à base de polysiloxane constituant au moins 40 % en poids sec, et plus de 65 % en poids de la matrice liante étant représentés par des parties polysiloxane, dans lequel le ou les revêtements comprennent en outre un ou plusieurs alcools modifiés par un poly(oxyalkylène) de la formule générale (I), (POA-O-)_{X}-R-(-O-FA)_{Y}, comme spécifié dans l'une quelconque des revendications 1 à 11, et un ou plusieurs revêtements comprennent en outre un ou plusieurs biocides, et dans lequel le système de revêtement comprend de 1 à 20 g/m² dudit ou desdits alcools modifiés par un poly(oxyalkylène) et de 2 à 35 g/m² dudit ou desdits biocides.

13. Revêtement anti-salissures selon la revendication 12, dans lequel le ou les biocides comprennent au moins un parmi le bis(1-hydroxy-2(1H)-pyridinethionato-O,S)-(T-4) de zinc (pyridinethione de zinc), le bis(1-hydroxy-2(1H)-pyridinethionato-0,S)-(T-4) de cuivre (pyridinethione de cuivre) et l'éthylène-1,2-bis-dithiocarbamate de zinc (éthylène-N-N'-dithiocarbamate de zinc).

14. Structure marine comprenant sur au moins une partie de sa surface externe (i) un revêtement anti-salissures tel que défini dans l'une quelconque des revendications 1 à 11, ou (ii) un système de revêtement anti-salissures selon l'une quelconque des revendications 12 à 13.

15. Composition de revêtement anti-salissures à base de silicone comprenant au moins 40 % en poids sec d'un système liant à base de polysiloxane, dans laquelle plus de 65 % en poids du système liant sont représentés par des parties polysiloxane, ladite composition de revêtement comprend en outre un ou plusieurs alcools modifiés par un poly(oxyalkylène) de la formule générale (I), (POA-O-)_{X}-R-(-O-FA)_{Y}, comme spécifié dans l'une quelconque des revendications 1 à 11, et un ou plusieurs biocides, ladite composition de revêtement comprenant de 1 à 10 % en poids sec dudit ou desdits alcools modifiés par un poly(oxyalkylène) et de 2 à 20 % en poids sec dudit ou desdits biocides ; et/ou comprenant de 1 à 10 % en volume de matières solides dudit ou desdits alcools modifiés par un poly(oxyalkylène) et de 1 à 13 % en volume de matières solides dudit ou desdits biocides ; et/ou dans laquelle le rapport pondéral entre le ou les alcools modifiés par un poly(oxyalkylène) et le ou les biocides est compris dans la plage de 5:1 à 1:10 ; éventuellement pour toutes les compositions de revêtement englobées dans la revendication 15, le ou les biocides comprennent au moins un parmi le bis(1-hydroxy-2(1H)-pyridinethionato-O,S)-(T-4) de zinc (pyridinethione de zinc), le bis(1-hydroxy-2(1H)-pyridinethionato-0,S)-(T-4) de cuivre (pyridinethione de cuivre) et l'éthylène-1,2-bis-dithiocarbamate de zinc (éthylène-N-N'-dithiocarbamate de zinc).
